# EUROPEAN PATENT SPECIFICATION

(11) **EP 4 135 926 B1**
(45) Date of publication and mention of the grant of the patent: **31.12.2025**
(21) Application number: 21788188.7
(22) Date of filing: 16.04.2021
(51) Int. Cl.: B23K 26/03, B23K 26/04, B23K 26/042

(54) **STATIC AND DYNAMIC CALIBRATION FOR COHERENCE IMAGING MEASUREMENT SYSTEMS AND METHODS**
STATISCHE UND DYNAMISCHE KALIBRIERUNG FÜR KOHÄRENZBILDGEBUNGSMESSSYSTEME UND -VERFAHREN
ÉTALONNAGE STATIQUE ET DYNAMIQUE POUR SYSTÈMES ET PROCÉDÉS DE MESURE À IMAGERIE PAR COHÉRENCE

(30) Priority: 16.04.2020 US 202063011235 P
(43) Date of publication of application: 22.02.2023
(73) Proprietor: IPG Photonics Corporation, Oxford, Massachusetts 01540 (US)
(72) Inventor: KANKO, Jordan A., Kingston, Ontario K7K 0G5 (CA); CHEN, Hui-Chi, Kingston, Ontario K7M 3V7 (CA); MOEMEN, Moemen Y., Kingston, Ontario K7M 7H6 (CA); WEBSTER, Paul J.L., Kingston, Ontario K7L 0A5 (CA)
(74) Representative: Peterreins Schley
(86) International application number: PCT/US2021/027672
(87) International publication number: WO 2021/211960

(56) References cited:
- WO-A1-2016/041768
- CA-A1- 2 905 616
- DE-A1- 102018 000 887
- US-A1- 2005 067 394
- US-A1- 2013 188 178
- US-B2- 8 822 875

## Description

### TECHNICAL FIELD

The present disclosure relates to coherence imaging measurement systems and methods for monitoring high energy beam processing applications and more particularly, to static and dynamic calibration techniques for alignment of a measurement beam in coherence imaging measurement systems and methods.

### BACKGROUND INFORMATION

The use of coherence imaging (CI) measurement systems (e.g., the IPG Photonics LDD700 system) for monitoring laser processing applications (e.g., laser welding, laser additive manufacturing, laser marking, laser material removal, laser cleaning, etc.) offers immense benefits for process outcomes. The benefits of CI systems are realized primarily in their spatial and temporal relationships to the laser process itself. For example, more specific relationships include the temporospatial relationship of the CI measurement beam to the processing laser beam spot on the workpiece undergoing processing. A typical single-measurement of a CI system, herein referred to as an A-line, is imparted meaning based on the context in which it is acquired.

This meaning is, in part, assigned meaning based on where the measurement is taken: in space relative to the workpiece (e.g., subcomponent A and subcomponent B in a joining application forming component AB); in space relative to the process cell (e.g., relative to workpiece fixturing, relative to a cell coordinate frame, relative to a tooling coordinate frame, etc.), in space relative to the process (e.g., ahead of the process path vector); in time relative to the process (e.g., 100 ms after the process is completed); in space relative to the processing laser focal spot (e.g., 0.1 mm behind the process beam); in time relative to the processing laser power modulation (e.g., 0.5 ms after each laser pulse in a series of laser pulses); and in time relative to a processing laser beam modulation pattern (e.g., 0.05 ms after the starting phase of a circular laser wobble pattern).

In the example of laser welding, CI measurements may be taken at a specific distance sufficiently far in front of the processing laser focal spot, during laser processing, such that measurements are unaffected by the process itself, but close enough to the focal spot such that accurate measurements of the part fit-up geometry (e.g., the seam-line between the two components being joined by the welding process) may be used to determine if the focal spot is sufficiently aligned to the seam-line. In some cases, these measurements may be further used to dynamically correct misalignment. Similarly, CI measurements performed in the phase change region during laser welding may be used to measure the weld process's keyhole depth - a critical metric for many laser welding processes.

For many laser processing applications, the registration of CI measurements to the laser focal spot and temporal power modulation profile should be of sufficient accuracy and precision for the resulting measurement to be useful in the context of process monitoring and process control. Specific requirements may vary depending on the application and the types of CI measurements being performed for the application. For example, in multi-mode laser welding applications, it is often sufficient to spatially register CI measurements to the process beam, on the surface of the workpiece, to within distances on the order of tens to hundreds of microns. Whereas in single-mode laser welding applications, registration distances on the order of a few tens of microns to single microns may be desirable.

Similarly, temporal registration to the processing laser's temporal power profile on the order of tens to hundreds of microseconds is sometimes desired for keyhole depth measurements of pulsed welding applications. Such registration may be desirable to ensure CI measurements are performed while the keyhole vapor channel is open.

The above examples help illustrate the importance of temporospatial registration of the CI system to the processing laser in a few laser processing applications. The general importance, however, extends far beyond the limited examples provided above. Such registration is beneficial in altering the measurement system behavior to acquire more useful measurements, as well as to determine the usefulness of a measurement (e.g., by quantifying its lack of registration) and alter the measurement data processing accordingly.

In some applications, strict registration requirements involve a trained professional to commission the CI system on-site, at the laser processing station. In some applications, the commissioning procedures may need to be performed iteratively, until the specific requirement is achieved. In these cases, registration requirements imposed by the application are very time-intensive. The minimum knowledge and time to perform such procedures can be a large barrier to future modifications to the laser processing station as it can involve redeployment of a trained professional, large amounts of remote support from a trained professional, or a significant amount of upfront training for the laser processing station operators.

In many applications, the registration procedure and CI system calibrations are specific to the hardware configuration (e.g., specific to a laser processing station) and need to be performed for every deployed CI system. Engineering and manufacturing tolerances can involve calibrations to be performed for each laser processing station even if the stations are nominally the same. Similarly, in some applications, further calibration procedures are desired to perform registration procedures that are specific not only to the laser processing station but are specific to the process itself. As a result, CI systems that are used to monitor a variety of laser processing applications, or even different types of the same laser processing application, may involve many calibrations.

In cases where the CI system has some resonant component, jitter properties or other characteristic where the phase of the A-line acquisition timing cycle is difficult to control and/or predict, the temporal-spatial relationship between the A-line and the rest of the process may sometimes need to be determined retrospectively. However, even in these cases, the techniques and apparatus described herein provide benefits of equivalent value when compared to implementations where the A-lines may be triggered "on demand".

Manufacturing tolerances, in combination with very stringent registration requirements, may involve CI system recalibration following common, though relatively infrequent, laser processing station procedures. These procedures may include: changing the protective cover slide of the laser head; changing the focal length of the laser head focusing optic; replacing the laser delivery fiber; replacing the laser head with a spare; and adjusting the CI system delivery optics. In such applications, end users of the CI system may need to monitor the system's registration throughout its use or may need to perform multiple calibrations throughout its operational lifecycle.

External environmental effects (e.g., changes in temperature, vibrations, humidity) and maintenance (replacement of process fibers, cleaning of systems) can vary the registration between the process and imaging optics. Since these influences cannot always be isolated to a subset of the components of the system, a means to directly co-register the various imaging and energy beam systems, taking into account the net effect of all of these influences on co-registration, is desirable. In many cases, the best way to do this is to use the imaging system(s) to make an observation of the interaction of the process beam with a material.

Accordingly, there is a need for a new apparatus and methods which: improve the accuracy of registration procedures; improve the precision of the registration procedures; reduce the time requirements of registration procedures; automate (semi or fully) registration procedures; alleviate the minimum knowledge and experience requirements to perform registration procedures; or some combination thereof.
DE102018000887A1 describes a device and a method for performing and monitoring a machining process on a workpiece by means of a high-energy machining beam, the device comprising: - a machining device with a machining beam source for generating the high-energy machining beam having an optical axis and a machining beam optics for projecting and / or focusing the high-energy machining beam onto a current machining area on the workpiece; an optical coherence tomograph for generating a measuring beam which can be deflected via a movable deflecting device and coupled into the processing beam optics for monitoring the machining process.

### SUMMARY

The present invention is defined by the system of claim 1 and by the method of claim 10. Preferred embodiments are described in the dependent claims.

In some embodiments of this method, the CI measurement system is automatically controlled to modify future measurements made by the CI measurement system such that static calibrations are performed for alignment of the CI measurement system and the processing beam. In other embodiments of this method, the CI measurement system is automatically controlled to modify future measurements made by the CI measurement system such that dynamic calibrations are performed for alignment of the CI measurement system and the processing beam.

Consistent with a further aspect of the present disclosure, a system includes a material processing system, at least one material processing system controller, a coherence imaging (CI) measurement system, and at least one CI system controller. The material processing system includes a laser for generating a laser processing beam and a processing beam head for delivering the laser processing beam to a target. The laser is configured to generate an output substantially of a single spatial mode with an M-squared value of less than 2.0. The material processing system controller(s) is(are) configured to cause the material processing system to generate and direct the laser processing beam to the target for a calibration measurement.

In some embodiments of this system, the material processing system controller may be configured to cause the material processing system to generate and direct the laser processing beam to the target to produce a physical modification on the target. In these embodiments, the calibration measurement output may be based on the physical modification, and the CI system controller may be configured to control the CI measurement system to align the CI measurement system relative to the physical modification. In other embodiments, the material processing system controller may be configured to cause the material processing system to generate and direct the laser processing beam to the target to generate localized process radiation on the target. In these embodiments, the calibration measurement output may be based on the localized process radiation, and the CI system controller may be configured to control the CI measurement system to align the CI measurement system relative to the localized process radiation.

The CI measurement system includes a coherence imaging (CI) core unit for generating a measurement beam and a CI scan module for delivering the measurement beam to the target, wherein the CI measurement system produces a CI measurement output. The CI system controller(s) is(are) configured to receive the CI measurement output from the CI core unit for monitoring and/or controlling the material processing system. The CI system controller(s) is(are) also configured to receive a calibration measurement output and to control the CI measurement system based, at least in part, on the calibration measurement output. The CI system controller(s) is(are) configured to control the CI measurement system to modify future measurements made by the CI measurement system for alignment of the CI measurement system and the processing beam. In some embodiments of this system, the CI measurement system may include an inline coherent imaging (ICI) measurement system and the CI measurement system may be configured to produce the calibration measurement output. In other embodiments, an auxiliary sensor may be configured to produce the calibration measurement output.

Consistent with yet another aspect of the present disclosure, a method is provided for calibrating a coherence imaging (CI) measurement system. The method includes: providing a material processing system including a laser configured to generate and deliver a laser processing beam to a target; providing a coherence imaging (CI) measurement system configured to generate and deliver a measurement beam to the target and configured to provide a CI measurement system output for controlling and/or monitoring the material processing system; generating and directing the laser processing beam to the target for a calibration measurement; obtaining a calibration measurement output from the CI measurement system and/or from an auxiliary sensor; and automatically controlling the CI measurement system based on, at least in part, the calibration measurement output, wherein the CI measurement system is controlled to modify future measurements made by the CI measurement system for alignment of the CI measurement system and the processing beam. In some embodiments of this method, the laser may be configured to generate an output substantially of a single spatial mode with an M-squared value of less than 2.0.

In some embodiments of this method, the laser processing beam produces a physical modification on the target, which corresponds to a position of the processing beam. In these embodiments, the calibration measurement output may be based on the physical modification, and the CI measurement system may be controlled to align the CI measurement system relative to the physical modification. Obtaining the calibration measurement output may include, for example, measuring the physical modification with the CI measurement system. In other embodiments, the laser processing beam generates localized process radiation on the target, which represents a position of the processing beam. In these embodiments, the calibration measurement output may be based on the localized process radiation, and the CI measurement system may be controlled to align the CI measurement system relative to the localized process radiation. Obtaining the calibration measurement output may include, for example, detecting the localized process radiation with the CI measurement system.

### BRIEF DESCRIPTION OF THE DRAWINGS

These and other features and advantages will be better understood by reading the following detailed description, taken together with the drawings wherein:
FIG. 1 is a schematic block diagram of a laser processing system and a coherence imaging (CI) system capable of CI system calibration measurements, consistent with embodiments of the present disclosure.
FIG. 2 is a schematic block diagram of a laser processing system and a coherence imaging (CI) system with a 2D inline camera for CI system calibration measurements, consistent with other embodiments of the present disclosure.
FIG. 3 is a schematic block diagram of a laser processing system and a coherence imaging (CI) system with a double clad fiber and photodetector for CI system calibration measurements, consistent with further embodiments of the present disclosure.
FIG. 4 is a schematic block diagram of a laser processing system and a coherence imaging (CI) system with a 2D camera below the laser head for CI system calibration measurements, consistent with even further embodiments of the present disclosure.
FIG. 5 is a series of images illustrating an example process beam registration calibration performed using interferometry output measurements acquired during a raster scan of a marked calibration target and processed using a series of image processing algorithms.
FIG. 6 is a block diagram illustrating example of interferometry measurement data processing algorithms employed for a process beam registration calibration.
FIG. 7 is a schematic illustration of example CI system scan module measurement acquisition scanning patterns employed for feature detection in CI system calibration measurements.
FIG. 8 a graph illustrating an example of temporal gating strategies used to distinguish between back-reflected process beam light and process radiation emanating from the laser interaction zone
FIG. 9 are plots illustrating an example process radiation line scan performed with the system shown in FIG. 1 at two positions within a laser scan head scan field
FIG. 10 is a schematic illustration of an example of process beam registration using an apparatus with a 2D inline camera.
FIG. 11 is a schematic illustration of a shared optical path between the CI system scan module and the inline camera.
FIG. 12 is a graph illustrating an example temporal gating scheme used to distinguish process beam proxy and imaging beam proxy measurements using the 2D camera in the system of FIG. 2.
FIG. 13 is a schematic illustration of calibrations to align the CI system reference frame to the process beam/workpiece reference frame.
FIG. 14 are plots illustrating an example of process radiation measurements recorded by the system shown in FIG. 1 (left) and data processing operations, such as noise rejection and curve fitting, that may be used to find the data's centroid (right).
FIG. 15 is a schematic illustration highlighting an example of the difference in commanded imaging beam position and actual measurement beam position with correct and incorrect tracking errors when scanning in opposite directions.
FIG. 16 are graphs illustrating example signal measurements obtained while scanning over a static feature in two opposite directions using a correct tracking error (top) and an incorrect tracking error (bottom).
FIG. 17 is a schematic illustration of an example of the types of corrections that need to be applied to the imaging system's scan module positioning commands, as a function of scan field position to correct for optical distortions in a laser scan head.
FIG. 18 is a schematic illustration of an example of path-specific imaging beam and process beam registration measurements for an apparatus involving a laser scan head.
FIG. 19 is an image illustrating calibration measurements performed by the system of FIG. 3, employing a double clad fiber in combination with an auxiliary photodiode, used to determine the process beam center location (1) and path direction (2) during a laser process.
FIG. 20 is an image illustrating calibration measurements performed by the system of FIG. 2, employing a 2D inline camera, used to determine the process beam center location and path direction during a laser process.
FIG. 21 are images and graphs illustrating example calibration measurement techniques performed by a system using point-based measurement acquisitions (e.g., an interferometry output or single point process radiation measurement in combination with the CI system scan module) to identify process direction.
FIG. 22 is a schematic illustration of an example of how changes to the keyhole laser welding process, such as changes in process velocity, may cause the location of the vapor channel to change with respect to the process beam focal position.
FIG. 23 are schematic illustrations of how the use of measurement lines transverse to the nominal laser processing path direction can be used to identify a difference between the nominal and actual processing paths.
FIG. 24 is a schematic illustration of a local surface tilt calibration measurement process.
FIG. 25 is an image illustrating an area of a workpiece captured by a CI system scan and including a laser spot diameter identified using imaging data collected by the CI system.

### DETAILED DESCRIPTION

Systems and methods for static and dynamic calibration, consistent with the present disclosure, may be used to provide alignment of a measurement beam from a coherence imaging (CI) measurement system (also referred to as a CI system) relative to a processing beam from a material processing system. Calibrations may be made to the system before a process is performed (i.e., system level calibrations), during a process (i.e., process level calibrations), and/or in between processes (i.e., intra-process level calibrations). Although the illustrated embodiments show laser processing systems, the systems and methods described herein may be used with any high-energy beam processing applications (e.g., electron beam) and not just laser processing. Embodiments of CI measurement systems include, for example, an inline coherent imaging (ICI) system such as those disclosed in U.S. Patent Nos. 8,822,875, 9,757,817 and 10,124,410, U.S. Patent Application Publication No. 2020/0023461, and U.S. Patent Application Serial No. 16/721,306 (now U.S. Pat. App. Pub. No. 2020/0198050).

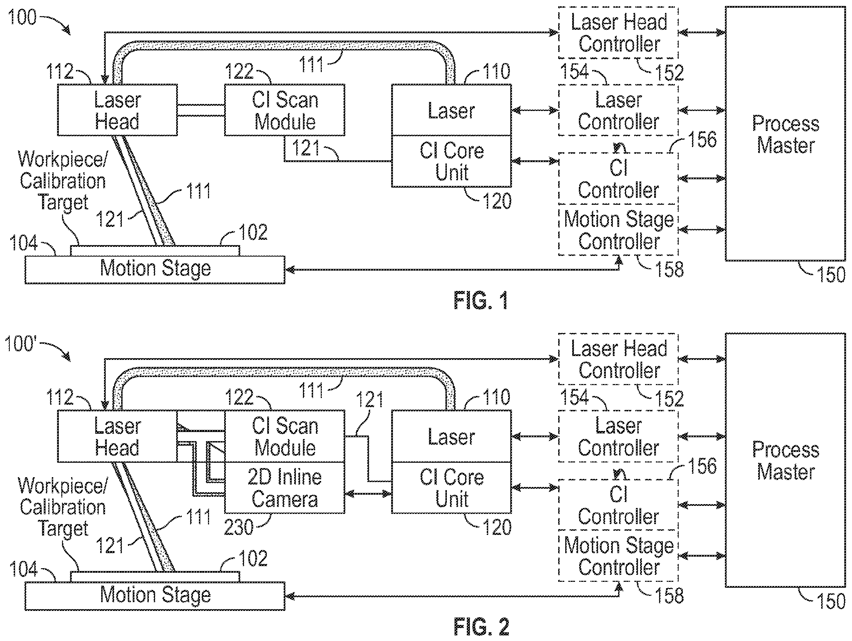

Referring to FIGS. 1-4, systems 100, 100', 100", 100"', consistent with embodiments of the present disclosure, generally include a material processing system, a coherence imaging (CI) measurement system, and controllers/processors for controlling both systems. The material processing system includes at least one material processing beam source (e.g., laser 110) that delivers a processing beam 111 to a workpiece 102 by an energy beam delivery system (e.g., laser head 112) to perform a material modification process. The CI measurement system includes a CI core unit 120 that provides a measurement beam 121 to the workpiece 102 and produces an interferometry output from at least a component of the measurement beam 121 directed to and reflected from the workpiece 102. One or more of the controllers/processors (e.g., laser controller 154 and CI controller 156) may be used as a feedback controller that monitors at least one processing parameter of the material modification process and a feedback controller that adjusts the behavior of the coherent imaging system based on at least one calibration measurement.

The coherent imaging system (i.e., the CI core unit 120) comprises an imaging optical source (not shown) that produces imaging light (i.e., measurement beam 121) and an optical interferometer (not shown) that produces an interferometry output using at least a component of the imaging light that is delivered to the workpiece 102. The coherent imaging system also includes a scan module 122 that directs at least a component of the imaging light relative to the material processing beam source (e.g., laser 110). The CI controller 156 may include a processing unit that performs data processing and analysis on the interferometry output and a controller that coordinates measurement acquisition, directs scan module position, and communicates with external elements. The CI controller 156 may act as a feedback controller that uses at least one of the interferometry output measurements to calibrate the behavior of the imaging system via its measurement acquisition and scan module positioning. In some embodiments, the measurements used to calibrate the behavior of the imaging system are obtained, additionally or alternatively, by one or more auxiliary sensors or detectors.

The workpiece 102 undergoing material processing may be a component or subcomponent with specific functionality, or it may be a calibration target whose purpose is to enable a coherent imaging system calibration measurement.

The material processing beam source may be a laser 110 or electron beam source. The laser beam 111 may be a single mode beam or a multimode beam. A single mode beam includes a beam with an M-squared value of 2 or less, and more specifically 1.5 or less. The laser beam source 110 may include, without limitation, a fiber laser, a disk laser, a solid state laser, a diode laser, or a CO2 laser. The laser beam 111 may have spectral components in the ultraviolet region, the visible region, or the infrared region.

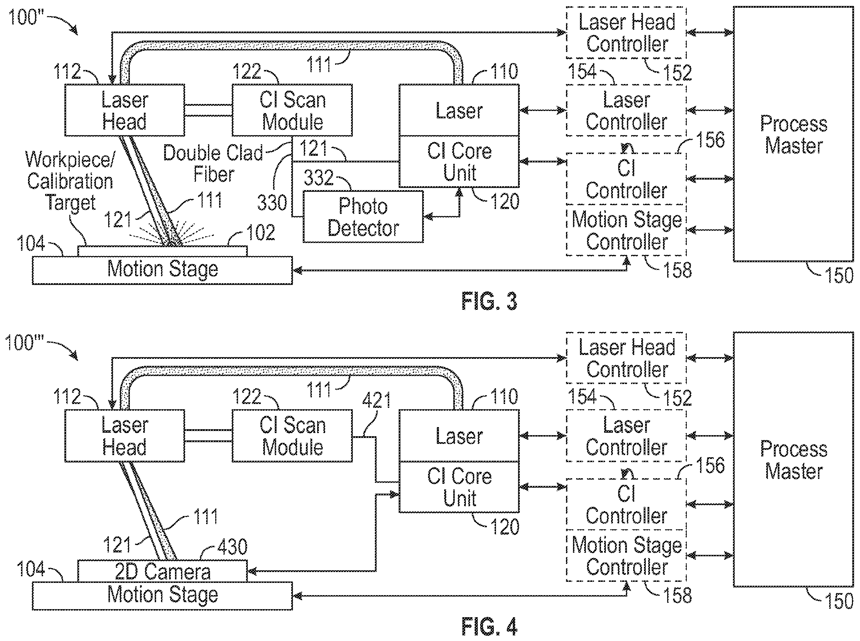

In the case of a laser beam, the energy beam delivery system (e.g., laser head 112) may include one or more of a fixed optics head, a wobble head, a pre-objective scan head, or a post-objective scan head. The laser head 112 may include an instrumentation port to interface with the coherent imaging system and introduce the measurement beam 121 substantially coaxially with the laser beam 111. Where auxiliary sensors are included in the system, the laser head 110 may include additional instrumentation ports, such as an inline camera port (see, e.g., FIG. 2). Additional auxiliary sensors may include inline cameras (e.g., 2D inline camera 230 in FIG. 2), photodiodes (e.g., photodetector 330 in FIG. 3), and spectrometers. The auxiliary sensors may also have their own sensor control modules to analyze and process measurements. The outputs from the auxiliary sensors are fed back to the CI controller 156 and are used for coherent imaging system calibration.

The material modification process performed using the systems described herein may include, without limitation, one or more of the following: welding; drilling; cutting; routing; perforating; brazing; sintering; surface treatment; additive manufacturing; and subtractive manufacturing. One example of monitoring and controlling wobble-processing using ICI is disclosed in greater detail in U.S. Patent Application Publication No. 2020/0023461.

The apparatus may also include other processing equipment such as motion control stages (e.g., motion stage 104), robotic arms, processing atmosphere systems, air knives, shield gas, and process controllers.

The CI measurement system may be one of, or may be a variant of, the more common CI measurement system variants, including: time domain optical coherence tomography (TD-OCT); Fourier domain optical coherence tomography (FD-OCT), spectral domain optical coherence tomography (SD-OCT); swept-source optical coherence tomograph (SS-OCT); low coherence interferometry (LCI); and inline coherent imaging (ICI).

In SD-OCT and its variants, a low coherence light source produces light in a finite spectral band, for example 830 to 850 nm. This light is injected into an interferometer and ultimately measured using a spectrometer, which may include a grating and a linescan camera. Examples of light sources used in SD-OCT type systems include superluminescent diodes (SLDs) and frequency combs.

In SS-OCT and its variants, an adjustable narrow band light source produces narrow band light that is injected into an interferometer. The injected light center wavelength is adjusted over a spectral band to produce a single interferometry output. The light is generally measured by a photodiode or balanced photodetector synchronized to the light source spectral sweep. Examples of light sources used in SS-OCT include Fourier Domain Mode Locked (FDML) sources and vertical-cavity surface-emitting lasers (VCSELs).

Generally, CI measurement system variants share the following features: a beam splitter (e.g., a fiber 50:50 evanescent mode coupler) which splits the light from the light source into a sample arm, which delivers imaging beam light to the workpiece being measured, and a reference arm, which contains the interferometer reference optical path and which may be static or adjustable. The back-reflected light from the sample and reference arms are recombined at the beam splitter and transmitted to the imaging system detector. CI measurement systems also include a signal processor to interpret measurements coming off of the detector.

In the systems described herein, a beam scanning module 122 (e.g., a galvanometer scanner) is used to dynamically control the position of the measurement beam 121 (part of the sample arm path) relative to the processing beam 111. The CI controller 156 may apply system calibrations to influence how the imaging or measurement beam 121 is positioned relative to the processing beam 111, when measurements are performed, and/or how measurements are processed and analyzed. The CI scan module may include any device and/or optics capable of moving or deflecting one or more measurement beams including, without limitation, a galvo scanner, one or more moving lenses, a piezo scanner, a MEMS scanner, a KTN scanner, electro-optical deflectors (EODs), and acousto-optical deflectors (AODs).

The systems further include a feedback controller or processor (e.g., CI controller 156) to make use of the coherent measurements for making determinations about the quality of the process. Determinations may be a boolean OK/NOK determination or may involve more complex process analyses. The feedback controller or processor may also make use of measurement data to adjust process parameters to improve future aspects of the process or future processes.

The system may also include controllers for each of the main subsystems (e.g., a laser controller 154, a laser head controller 152, and a motion stage controller 158). The laser source 110 may have its own controller 154 to control the output power profiling, timings, monitor laser health, and communicate with other submodules or a process master. The motion control equipment and process assist subsystems may have their own controller 158 to control operations and communicate with other equipment. The laser head 112 may also have its own controller 152 to monitor laser head health, drive optomechanical components, and communicate with other equipment. A process master controller 150 (e.g., a programmable logic controller) may be used to control and coordinate all of the various subsystem and their controllers. In some cases, one of the subsystem controllers (e.g., the laser head controller 152) may take on the role of the process master.

### Embodiments of Systems and Contrast Mechanisms

According to various embodiments, different systems and contrast mechanisms may be used as an input to provide calibration measurements to a feedback controller. As used herein, "contrast mechanism" refers to a physical property and/or measurement principle thereof that allows one or more aspects of the workpiece and/or phase change region to be distinguished from one another. Embodiments of these systems and contrast mechanisms are described below.

### System 100 Using Coherent Imaging Contrast Mechanism

According to some embodiments, the system 100 shown in FIG. 1 may use the interferometry output measurements to provide calibration measurements to the feedback controller (e.g., CI controller 156). In this embodiment, the system 100 may still incorporate auxiliary sensors, but their measurements are not used as CI measurement system calibration inputs.

In this system 100, the measurement system hardware responsible for producing the interferometry output measurements of the laser process is the same as that used to generate the coherent imaging system calibration measurements. In most cases, this hardware maintains a similar configuration when performing calibration measurements as it does when performing process measurements. In some calibrations, however, it may be desirable to modify hardware configuration, behavior and/or parameters in order to improve the quality of the calibration measurement signal.

For example, in a SD-OCT type scheme, the detector integration time may be increased to improve SNR when measuring specific calibration features. In the general interferometry setup, the reference optical path may be modified to better match the optical path length associated with the calibration workpiece. Similarly, the imaging optical source power level may be similarly modified to produce back-reflected imaging beam levels more favorable for calibration target measurement.

An example calibration measurement routine - a process beam registration - enabled by an embodiment of the system 100 using a coherent imaging contrast mechanism is described below. CI system registration relative to the process beam 111 is achieved by analyzing the CI system measurements taken when the CI system scanning module 122 is directed at specific positions within the scanning module reference frame. Such reference frames may include: mechanical mirror deflection angles in the case of a galvo-based scanning module; analog drive voltage signal levels in the case of analog galvos; digital drive voltage signal levels in the case of digital galvos; piezo drive voltages; and a scanning module standard reference frame that may or may not be head-independent.

The precise position of the process beam 111 within the reference frame is unknown and is the target of the calibration routine, but the mechanical alignment of the optomechanical components generally ensures that the process beam 111 falls within the scan field of the scanning module. In such a system, process beam registration is achieved by analyzing coherent measurements of a workpiece 102 that has undergone a localized physical modification as a result of the process beam 111. The physical modification on the workpiece 102 is used as a proxy for the process beam spot. Because all of the beam delivery elements in the system are used to make this mark and deliver/collect the imaging beam 121, virtually all aberrant effects that would influence the ability of the CI measurement system to remain accurately and precisely co-registered with the process beam 111 can be measured and compensated at once.

A typical example of this contrast mechanism involves marking a small spot on the workpiece 102 with the process beam 111, such that the spot differs in height and/or reflectivity compared to the unprocessed material. The optical path length change (i.e., height) aspect of the coherent measurement may be used to provide path-length based contrast to identify the spot on the material. The back-reflected intensity aspect of the coherent measurement may be used to provide reflectivity-based (and to some degree geometry-based) contrast to identify the spot on the material. A combination of the height and intensity-based contrast mechanisms may also be used to identify the process beam location.

By performing coherent measurements of the process-induced spot at various points within the scanning module reference frame, signal processing and statistical algorithms may be used to identify a region within the scanning module reference frame as the process beam (proxy) center. For example, the processed spot may form a small cavity in the workpiece 102. Height-based measurements of the cavity may exhibit a behavior where the surface height decreases from the unmodified material surface towards the center of the cavity (a proxy for the process beam center location). In a simple implementation, this location may be identified by taking the position (within the scanning module frame) of the coherent measurement exhibiting the lowest measured height. In more complex implementations, image processing algorithms or fitting operations may be deployed to identify a centroid region.

In addition to identifying a centroid, the systems described herein could be used to determine border regions, centers of mass, centers of power or other such definitions for locating a process beam.

A similar procedure may be performed instead using backscattered intensity levels rather than measured heights. In other procedures, a combination (e.g., intensity-weighted height measurements, height-weighted intensity measurements, etc.) of the two measurements may be used as the signal for processing.

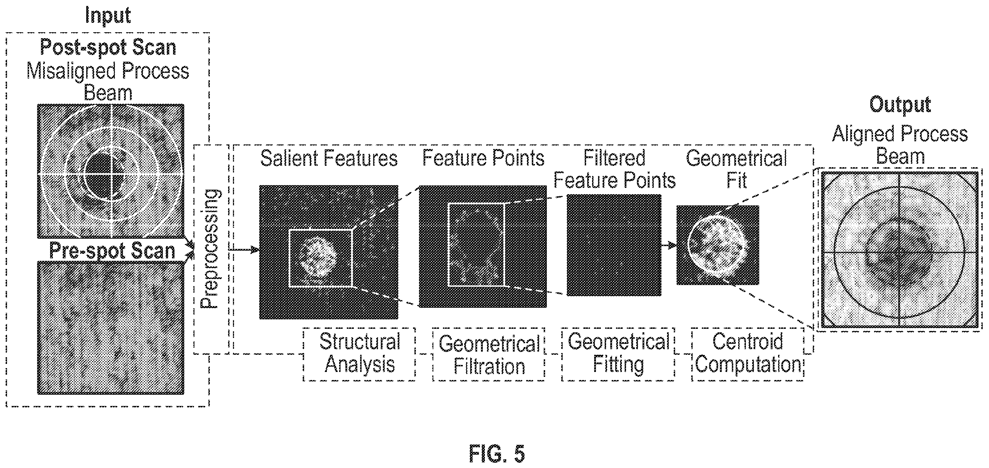

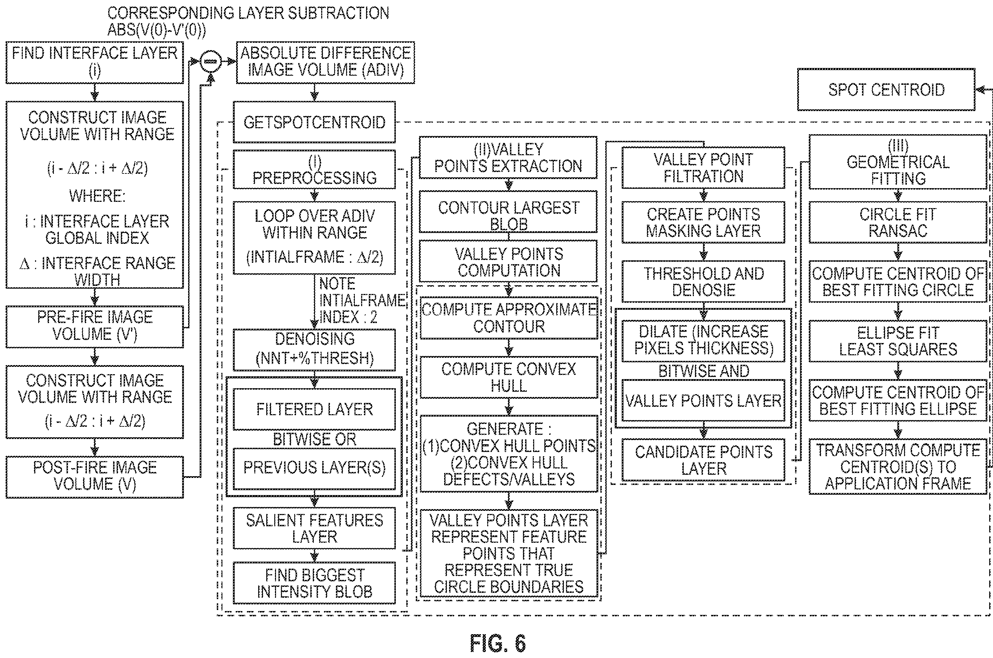

As shown in the overview of a spot processing algorithm illustrated in FIG. 5, process beam registration calibration may be performed using output measurements acquired during a raster scan of a marked calibration target and processed using a series of image processing algorithms. FIG. 6 illustrates a more detailed example of interferometry measurement data processing algorithms that may be used for process beam registration calibration.

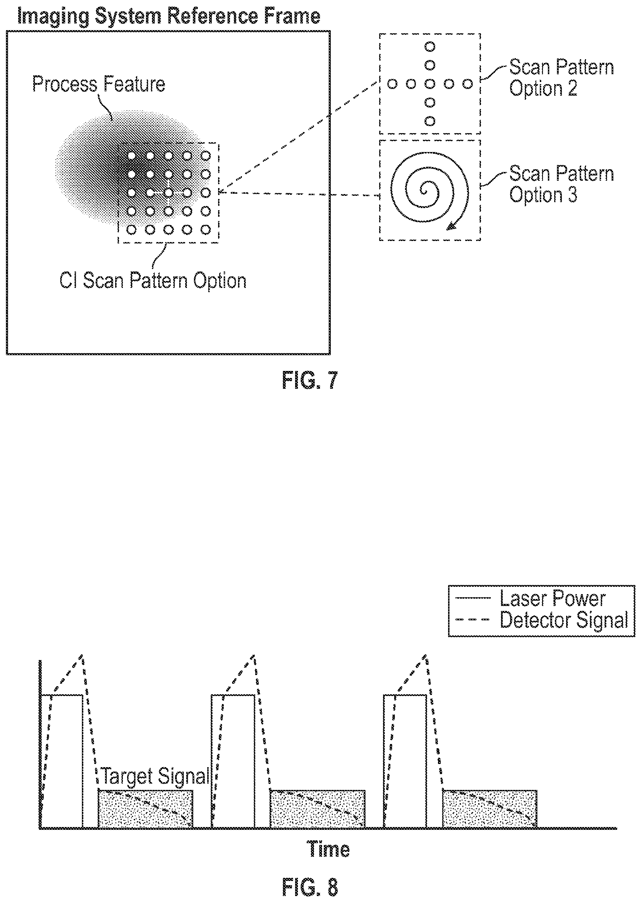

In addition to the variations in signal types that can be used to identify the process beam proxy, different scanning module search strategies may be deployed in order to speed up the acquisition process, improve detection accuracy, simplify data processing, or some combination thereof. Scanning strategies (within the scanning module reference frame) may include a 2D raster pattern over the proxy, orthogonal scan vectors with iteratively updated process beam center location (e.g., a similar process to "walking the beam" to achieve centroid determination for a Gaussian profile by adjusting two orthogonal axes), spiral scan patterns, discrete point measurements, feedback-based random walk scanning, etc. As illustrated by the scan pattern examples in FIG. 7, different scan module measurement acquisition scanning patterns may be used for feature detection in CI system calibration measurements including a square grid formation, cross pattern, and spiral pattern.

Averaging of detector measurements at the same CI scan module position may be performed to enhance SNR and rule out variations due to process non-idealities. Differential measurements may similarly be used to enhance SNR and reduce the influence of the characteristic speckle pattern common in CI images. In this context, a differential measurement could include measuring a material surface before it is modified, and then measuring again with substantially similar acquisition parameters after it is modified by the process beam. The two images are then compared with one or more differential calculations that are known to those of ordinary skill in the art.

### System 100 Using Native Process Emission Contrast Mechanism

According to other embodiments, the system 100 shown in FIG. 1 may use the native process emissions as a contrast mechanism. In these embodiments, the CI measurement system hardware can be configured, operated, or extended in such a way that the CI system optical components and detector can detect process radiation resulting from the laser processing application. In this embodiment, the system 100 may still incorporate auxiliary sensors, but their measurements are not used as CI measurement system calibration inputs.

In some implementations, using native process emissions involves an imaging light source that can be turned off or reduced to sufficiently low power that it does not interfere with process radiation detection and an imaging system detector that can be operated such that it can detect process radiation at levels above the background noise. Spectral domain CI systems are particularly well suited for this task because they can conveniently restrict their detection of the process radiation to the wavelength bands used for the subsequent coherent imaging task. This reduces and/or eliminates errors of registration, stemming from chromatic aberration.

In more specific implementations of the system 100, the CI measurement system may be extended to accommodate transmission of light outside the spectral band of the CI source to facilitate detection of process radiation by the CI system components. In other more specific implementations, the CI measurement system may also be extended to include a component to control the amount and/or color of light entering the detection system. Such a component may include one or more of the following: specific wavelength filters; neutral density filtering with adjustable filter levels; changing the fiber bend radius; fiber attenuators; and aperture adjustment (through an iris). Any of these elements may be flexibly removed and/or introduced into the optical path by actuators known to those of ordinary skill in the art.

In some implementations, process light returning through the imaging system optical path may be diverted to a secondary detector (e.g., a photodetector) better suited for such measurements or the CI detector may be specifically modified to allow better detection of the calibration signal.

An example calibration measurement routine - a process beam registration - enabled by an embodiment of the system 100 using a native process emission contrast mechanism is described in greater detail below. The process beam location in the field of view is achieved by turning off, or reducing to a negligible level, the CI system light source. The optical delivery path of the CI measurement system is used to transmit process radiation emanating from the laser interaction zone, through the laser head, and onto the detector of the CI measurement system. The CI optical delivery path may be temporarily modified (e.g., a change in optical filter or aperture) and/or the CI detector may have its settings temporarily changed (e.g., an increase in integration time on a linescan camera in an SD-OCT type system) for the purpose of increasing the signal to noise ratio (SNR) of the process radiation (e.g., black body radiation) measurement. In SS-OCT systems employing a balanced photodiode detection scheme, for example, one of the inputs to the channel pairs may be disabled (e.g., blocked) to avoid common mode cancellation of the calibration signal.

A specific laser process may be performed in order to generate a localized process radiation source (e.g., a black body emitter) to be used as a proxy for the process beam center. Specific workpiece/test piece material types may be used to enhance the proxy signal on the detector. Tungsten may be used to allow increased processing beam energy density and resist surface melt. Other materials (types and geometries) may be used to specifically optimize for a specific black body radiation spectrum. Specific laser processing parameters (e.g., low versus high power pulses) may also be used to enhance the proxy signal or to prevent damage to the workpiece. A non-damaging laser process allows the process radiation to be generated for proxy detection while preserving the underlying part - making it possible to perform registration procedures directly on production parts and directly within the production environment.

Additional auxiliary laser process considerations may be used to further enhance workpiece resistance to damage and/or enhance measured process radiation signals. Shield gas deployed over the workpiece surface during laser processing may help to stabilize the surface temperature, mitigate workpiece oxidation, and keep detected signal levels consistent. An air-knife may be used to prevent process vapors from obscuring the optical path to the detector, adversely affecting SNR.

In some cases, such as in scanner based laser processing, where chromatic aberration may cause problems for accurate process beam registration, the CI optical delivery path may be modified intentionally or unintentionally, permanently or temporarily, on production or during a calibration procedure, to improve rejection of spectral bands outside of the CI source band. The transmission of only the spectral components of the process radiation that overlap with the CI light source for the purpose of proxy identification can mitigate any registration errors associated with chromatic aberrations of the laser head.

In other cases, where systematic errors associated with chromatic aberration may be negligible or nonexistent, the CI optical delivery path may be modified to transmit a wider spectral band to improve the collected process radiation signal. In some cases, the CI optical delivery path may be modified to target a specific spectral band or bands of the process radiation. The targeting of specific spectral bands helps to improve registration accuracy as certain spectral bands may be more strongly associated with the proxy while other spectral bands may be byproducts of the environment or of the process used to create the proxy.

For example, a laser pulse may be used to establish a laser interaction zone on a steel plate to act as a black body emission source (the proxy), wherein the peak of the spatial blackbody emission profile coincides with the center of the processing beam. The primary spectral components associated with the proxy fall primarily in the infrared part of the spectrum. Plasma may be produced as an unintended byproduct of the laser process, which in turn, may increase process radiation levels in the visible and ultraviolet spectral regions. Due to the process environment and the process equipment (e.g., shield/cover gas flow), the spatial location associated with the peak plasma radiation signal may differ from the spatial location associated with the center of the black body emission source, and may cause errors in determining the center location of the proxy. By rejecting spectral components outside of the infrared region, signals associated with plasma may be rejected and the black body emission source center may be detected with improved accuracy. Similarly, a notch filter may be employed in the CI system optical path to block out back-reflected process beam light to better target the black body radiation.

In some embodiments, it may not be feasible to filter out the process beam radiation with an optical component. In this case, temporal gating may be used to separate the process radiation in the laser interaction zone from the back-reflected process beam light. An example of such temporal gating includes a pulsed-based laser processing waveform where process radiation measurements are only performed (or saved) during the off portion of the pulse's duty cycle. As shown in the temporal signal gating example in FIG. 8, temporal gating strategies may be used to distinguish between back-reflected process beam light and process radiation emanating from the laser interaction zone. Knowledge of the laser power profile (solid line), allows detector signal measurements (dashed line) taken only when the laser is off to be isolated. If the laser power profile is not known, specific features of the detector signal, such as the tail region (Target Signal), can be used to isolate the detector signal associated with the desired process event. This type of gating ensures that only radiation generated at the surface of the workpiece is collected by the measurement system. Similar temporal gating techniques may be used to effectively filter out undesired spectral components which may have shorter or longer decay times.

In some implementations, precise temporal gating may be achieved through access to (or command of) the laser gating drive signal. In some cases, however, it may not be feasible or accurate to perform temporal gating via this method. As a result, characteristics of the acquired signal itself may be used to perform the temporal gating. As an example, identification of a large spike followed by a tail region may be used to isolate the desired spectral components in the form of a signal tail (see FIG. 8). In other implementations, an additional photodiode may be used to optically identify the laser on periods by measurement of back-reflected process beam light.

In another example, where the processing and imaging beam wavelengths are close enough that chromatic aberration produces a negligible error or where the optical delivery system is constructed in such a way that chromatic aberration is not an issue, the back-reflected process beam light itself may be used as a proxy for detection. In such an example, the laser process may be selected such that the laser intensity is too low to produce any significant heating of the workpiece or absorption of the processing beam. Instead, the processing beam light is back-reflected off of the workpiece and part of it is transmitted through the CI optical delivery path and onto the detector. In this example, the peak spatial intensity of the back-reflected light is used as the proxy for the process beam center.

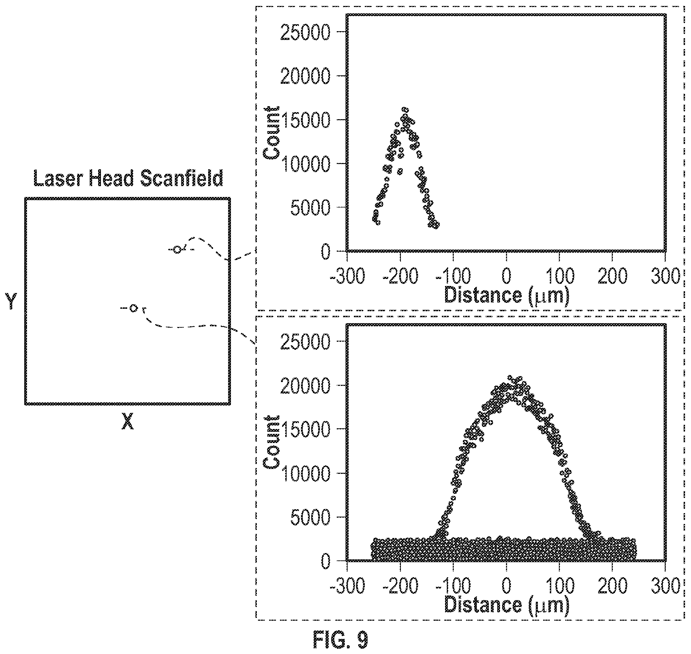

Similar scanning module scan strategies and signal processing strategies to those described above (e.g., see FIG. 7) may be applied to acquire and analyze the detected process radiation signal. The measured process radiation for points along a linear scan through the laser interaction zone is shown in FIG. 9. FIG. 9 shows process radiation measurements performed at two positions within a laser scan head scan field using a sweep along the X axis. The intensity profile (e.g., its peak or centroid) is used as a proxy for the process beam position within the CI system scan module frame. Similar measurements can be performed to determine alignment along the Y axis. As shown in FIG. 9, at the center of the laser head scan field, CI reference frame alignment to the process beam is good. As a result, the intensity profile of the sweep is maximized at a distance of 0 µm along the sweep performed in the CI reference frame. Due to chromatic aberration, at a point off centered in the laser head scan field (top right), the same measurement sweep performed in the CI reference frame presents a peak intensity profile signal at -200 µm along the sweep. Future CI measurement beam positioning operations can then account for this error to improve positioning accuracy.

Similar registration measurements can be performed at other places within the process beam scan field and along other CI reference frame axes to improve the overall calibration. Iterative scan techniques similar to "walking the beam" may be applied to improve measurement accuracy. Averaging of detector measurements at the same CI scan module position may be performed to enhance SNR and rule out variations due to process non-idealities.

### System 100' With 2D Inline Camera

The system 100' shown in FIG. 2 further includes a 2D inline camera 230, for example, coupled to a 2D camera port included in the energy beam delivery system. In some embodiments, the CI controller 156 may include at least one processing unit for extracting and analyzing 2D camera measurements and the data acquired by the 2D camera measurements may be transferred to the feedback controller responsible for implementing the CI system calibration.

In most implementations, the CI system hardware allows the imaging light source to be turned off or reduced to a sufficiently low power such that it does not interfere with process radiation detection. Alternatively or additionally, the imaging light source may be temporally modified such that, for at least one instance in time, it does not interfere with process radiation detection.

In many implementations, 2D camera measurements are extracted by a camera controller and passed to another controller responsible for performing data processing operations. However, in some cases, the camera controller may assume this responsibility. Data processing may be performed by another dedicated piece of hardware or may be performed on existing hardware such as the feedback controller.

The 2D camera port included in the energy beam delivery system (e.g., laser head 122) may be used in an inline camera configuration (e.g., looking through the beam delivery system). In other implementations, the 2D camera may be setup up off-axis to avoid sharing the processing beam and imaging beam optical paths. In an off-axis configuration, multiple 2D cameras may be used to achieve multiple viewing angles during the calibration measurement. In either configuration, the 2D camera optical path may also include additional optics (e.g., focusing lenses, filters, apertures, mirrors) to improve calibration measurement quality. The optical path may also be designed to better transmit certain spectral bands (e.g., NIR) and specifically reject others (e.g., VIS).

The specific optical path of the 2D camera 230 in relation to the processing and measurement beams 111, 121 may be variable. In some embodiments, the camera port may share at least some component of the optical path with the measurement beam 121. In others, there is no overlap in optical path. The 2D camera hardware may also have adjustable properties (e.g., exposure time, frame rate, field of view) that are configurable according to the type of calibration measurement being performed.

An example calibration measurement routine - a process beam registration - enabled by an embodiment of the system 100' with a 2D inline camera 230 is described in greater detail below. Process beam registration is achieved by performing a registration of the imaging beam to the inline camera reference frame (e.g., camera frame pixels) and a registration of the processing beam to the same inline camera reference frame. When both beams, or more specifically their individual beam proxies, are registered in the camera reference frame, the separation distance within the camera frame may be used to quantify the degree of imaging beam and processing beam registration (or conversely their degree of misalignment).

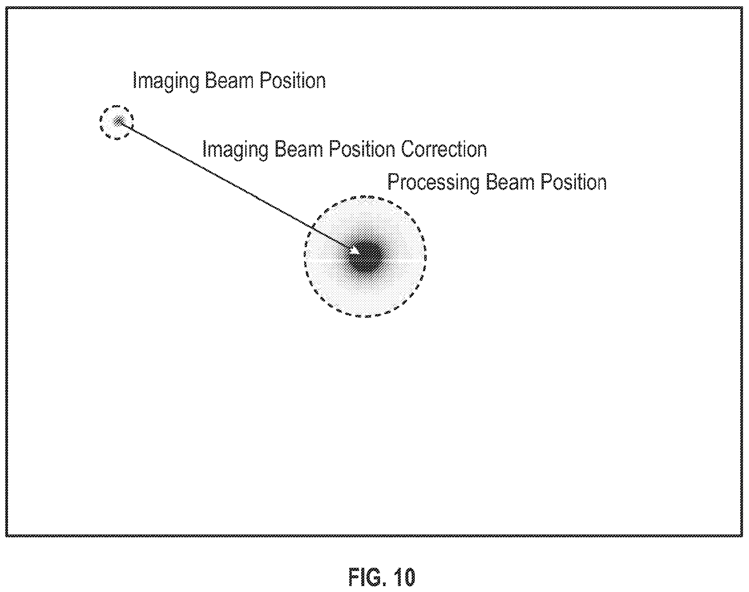

FIG. 10 shows an example of processing beam and imaging beam proxy registration using the 2D camera. The 2D inline camera detects back-reflected imaging beam light (the imaging beam proxy) and process radiation (the process beam proxy). Image processing is used to identify the degree of misalignment and correct the imaging beam position accordingly. The image in FIG. 10 shows a misalignment of the imaging beam proxy and the processing beam proxy. In order to register the imaging beam proxy to the processing beam proxy, the processing beam proxy position on the 2D camera may be recorded. The CI system scanning module is used to actively adjust the imaging beam position until its proxy position overlaps (to within an acceptable degree) the processing beam proxy. In the event that a specific calibration of the imaging beam position to the 2D camera frame has been performed a priori, such that imaging beam proxy locations on the camera are mapped to CI scanning module positions, registration of the imaging beam to the processing beam may be performed by back-calculating the correction from the displacement between the imaging and processing beam proxies on the camera.

In this type of setup, the optical paths and 2D camera settings permit the detection of both the imaging and processing beam proxies. A processing beam proxy may be established similarly to that described above for system 100 using the native process emissions contrast mechanism. An imaging beam proxy may be established by using at least some component of the imaging beam light back-reflected from the surface of the workpiece. Similar to what was described for workpiece material and geometry optimization for system 100 using the native process emissions contrast mechanism, the workpiece material and geometry may be selected to divert a specific amount of the back-reflected imaging beam to the 2D camera.

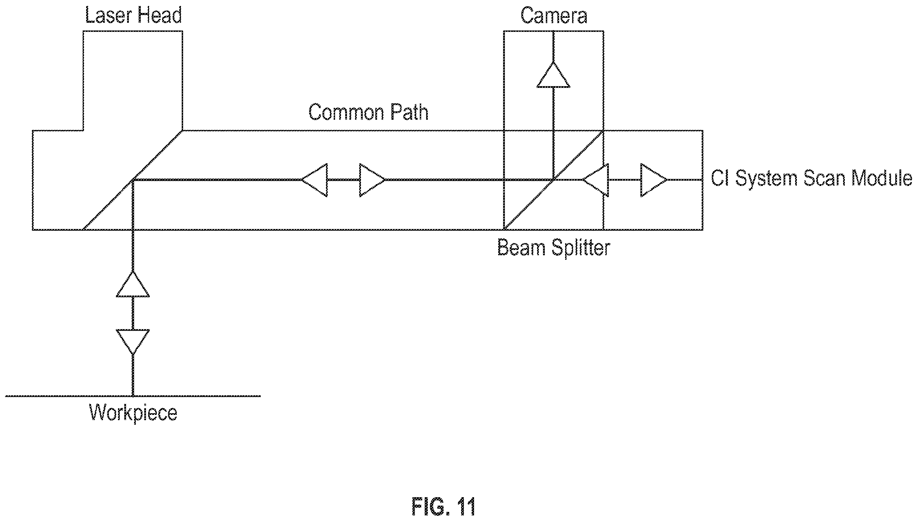

In the case where the camera optical path and CI system optical path are shared, as shown in FIG. 11, diversion of some of the back-reflected beam from the CI system to the camera may be achieved by a beam splitter. Depending on the specification and requirements of the CI system detector and the camera, the ratio of the splitter (e.g., 50:50 vs 90:10 vs 99:1) may be apparatus specific. Splitting of the light may also be achieved using a polarized CI light source and a polarization beam splitter. Other possible means of directing the back-reflected imaging beam light onto the camera include a mechanically adjustable reflector (e.g., a mirror) to direct the light to the CI measurement system when it is desired for coherent measurements and to direct the light to the camera when it is desired for processing beam registration.

In the case where the camera optical path is separate from the CI system optical path (e.g., an off-axis camera), the workpiece geometry and/or material type and/or fixturing position may be intentionally selected to induce diffuse scattering or angled specular reflections aimed at increasing the amount of light directed along the camera optical path.

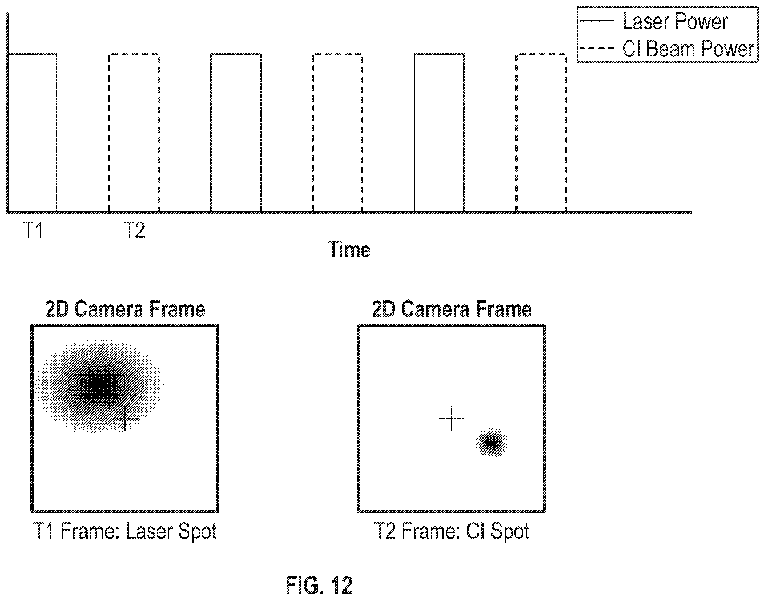

The fact that both the imaging beam proxy and processing beam proxy are registered on the 2D camera presents some additional challenges to individual detection. As the registration of the imaging beam to the processing beam improves, the two proxies begin to overlap on the camera and may not be individually distinguishable. If chromatic aberration is not significant and the processing beam proxy is composed of different spectral components than the imaging beam proxy, then adjustable spectral filtering may be applied to resolve each beam proxy on the detector. However, if chromatic aberration is non-negligible, or if a simpler implementation is favored, the two spots may be temporally resolved. FIG. 12 shows an example of a 2D camera temporal gating scheme used to distinguish process beam proxy and imaging beam proxy measurements using the 2D camera. As shown, temporal modulation of the laser power (top graph solid line) and imaging beam power (top graph dashed line) and synchronization to 2D camera frames allows frames to be classified as process beam proxy frames (bottom left graph) or imaging beam proxy frames (bottom right graph).

For example, the processing beam proxy may be first detected on the camera by turning off or blocking the CI light source. Laser processes similar to those described for system 100 using a native process emissions contract mechanism may be used to generate the processing beam proxy on the detector. Once the processing beam proxy has been identified in the camera frame, its center pixel location is stored and the laser process is stopped. The CI light source is then turned on. The imaging beam light back-reflected from the workpiece provides the imaging beam proxy on the camera. The center pixel of the imaging beam proxy may then be recorded and compared to the process beam proxy center to determine the degree of registration. This information may then be fed back to the CI system (as described above) to further improve calibration.

Depending on the frame rate of the 2D camera, the processing beam rise/fall time, the CI light source rise/fall time, and the workpiece, the two proxies may also be temporally resolved by performing a pulsed-laser processing sequence. While a multi-pulse sequence is not strictly necessary to perform co-registration of the two beam proxies, it does allow frame averaging to be performed to enhance SNR associated with center identification of each proxy and allow for a more accurate measurement. Frame averaging may be used to combat noise resulting from a variety of sources including camera shot noise, laser process non-idealities, workpiece surface imperfections, low signal levels, poor camera contrast, etc.

In addition to temporally gating the processing and imaging beam proxy signals, system settings may also need to be modified specifically for processing beam proxy acquisitions, for imaging beam proxy acquisitions, or for both. Due to the difference in nature of each radiation source, it is likely that radiation intensity levels may be different when measuring each proxy. As a result, techniques such as dynamic optical filtering adjusting camera exposure times, processing power adjustment, or imaging beam power adjust may need to be applied to ensure the optical intensity levels of each proxy are within the measurable range of the detector.

### System 100" With Double Clad Fiber

The system 100" shown in FIG. 3 further includes a double clad fiber 330 used to transmit coherent imaging system light within its core and to transmit process radiation within its cladding. In this system 100", at least one photodetector 332 is used to measure process radiation from the double clad fiber cladding and data processing hardware (e.g., CI controller 156) is used for extracting photodetector measurements. Details of this configuration are described in U.S. Patent No. 10,124,410. In most implementations of the system 100", the CI system light source is controllable such that it can be adjusted to facilitate, or not interfere with, system calibration measurements.

An example calibration measurement routine - a process beam registration - enabled by the system 100" is similar to that described above for system 100 using a native process emissions contrast mechanism. In this example, the process beam proxy is measured by collecting process radiation, transmitting it through the inner cladding of the double clad fiber, and registering it on a photodetector. Unlike system 100 using a native process emissions contrast mechanism, process radiation collected by the CI system detector is not used for calibration measurements. Photodetector measurements are synchronized to the CI system scan module position to map measurements to a useful CI system reference frame.

Chromatic differences between the coherent measurement beam spectral band and the spectral components collected by the inner cladding may result in chromatic aberrations when trying to coregister the imaging system reference frame to the process radiation. To account for these errors, the chromatic aberration effects may be corrected by data processing (e.g., calibrated ahead of time, modelled) or may be negated by optically filtering out process radiation spectral components that are sufficiently far from the measurement beam spectral band.

### System 100‴ With 2D Camera Positioned Below

The system 100‴ shown in FIG. 4 further includes a 2D camera 430 positioned sufficiently close to the working plane of the process (i.e., the plane containing the workpiece surface). The system 100‴ also includes optical filtering elements (not shown) to control the amount and spectral components of light reaching the 2D camera and at least one processing unit (e.g., CI controller 156) for extracting and analyzing 2D camera measurements. The data acquired by the 2D camera measurements may be transferred to the feedback controller responsible for implementing the CI system calibration.

An example calibration measurement routine - a process beam registration - enabled by the system 100‴ is similar to that described above for system 100' including the 2D inline camera. In this case, however, the 2D camera 430 is positioned at the working plane and is used directly to detect the processing and imaging beams. The 2D camera 430 also generally has additional filtering to ensure the measurement and processing beams are sufficiently attenuated to levels measurable by the detector.

The system 100‴ may also include additional automation hardware and controllers to enable automatic positioning of the 2D camera 430 at the correct calibration measurement positions while a calibration is being performed and to position the 2D camera 430 such that it is out of the way when laser processing is performed. In other systems, positioning of the 2D camera 430 may be performed manually by a system operator.

Techniques similar to those described for system 100' may be used to synchronize measurements and beam positions on the camera 430 to allow each beam type to be distinguished. In many cases, further synchronization of the processing source and imaging light source power levels are desirable to achieve readings in the range of the detector (i.e., above the detector noise and below its saturated value).

In some cases, it may not be possible to reduce the processing source power to a sufficiently low level that it can be measured by the detector. To accommodate this, some systems may make use of the source pump leakage light instead of the operational beam. In other systems, additional optical beam sampling components may be used to reduce the intensity of the processing beam before it reaches the detector. Some systems may further include a calibration light source with similar spectral qualities to the processing source but at substantially lower output powers, which can be directed substantially along the processing beam optical path. This calibration light source may be used as a proxy for the process beam source for 2D camera measurements. While imaging light source power levels can generally be reduced sufficiently low to be detected, the same techniques may be applied on the imaging beam as well.

In further embodiments, a combination of any of the above systems 100, 100', 100", 100'" may be useful in achieving different detection contrast mechanisms as different techniques may be better suited for certain types of registration procedures and laser processes.

### Calibration Types

Various types of calibrations may be performed using the systems described above to benefit different types of laser processing applications. The examples described herein are non-limiting examples commonly encountered in laser welding applications. While these examples are described in the context of laser welding, such examples and registration processes may be extended to other forms of energy beam welding and other laser processing applications.

Generally, calibration measurements can be performed by the system in the absence of a priori inputs to the calibration process. In some cases, however, a priori information may be useful to reduce calibration time and increase calibration accuracy. A priori information may be in the form of one or more of the following: a default calibration, compiled from a series of past calibration measurements of the same type on similar subsystems; past calibration measurements for the same subsystem; and outputs from optical models or simulations such as those employed by computational optical simulations software, such as Zemax Optical Design.

For some applications, a priori information may be used to achieve sufficient calibration, but in most applications, a priori information is used to supplement the measurement system calibration routine.

### Static Calibration

The above systems may be used to perform static (i.e., non-process specific) calibration measurements. Such measurements typically are performed when a CI measurement system is first integrated into a laser processing station or when modifications are performed on the CI delivery optics and/or the process beam delivery optics. For applications with high precision calibration requirements (e.g., single mode laser processing), such calibrations may be performed more frequently to compensate for equipment tolerance limitations, temperature drift, environmental fluctuations, mechanical vibrations, dynamic forces during processing, etc. By communicating with the process master and/or external equipment, one or more of these static calibrations can be performed in the context of using the system in serial production.

One or more static calibration procedures may also be performed on the workpieces being processed by the system periodically, after a certain threshold of failed quality measurements, after changes in temperature, after maintenance or after one or more parts of the processing system are replaced. Because the available space on the workpieces may have geometrical complexity in the vicinity of the calibration marks, some embodiments include the ability to suppress part of the scanned image data so that these regions do not falsely attract and confuse the contrast detection algorithms. In cases where multiple calibration procedures are performed, these results can be averaged and their distributions analyzed to determine if the registration of the process and measurement beams is likely to be correct. For example, if the width of the distribution of measurements is equal to or larger than the expected size of the process beam at the workpiece, then the registration is probably not very good. However, if the distribution of the measurements is much smaller than this value, then the chances of a good registration are high.

The following examples are first described in the context of the calibration. Additional sub-examples are used to illustrate how the systems/contrast mechanisms described above may be deployed to perform such a calibration. Although only a few select sub-examples are described herein, the above described systems and contrast mechanisms may be used in other sub-examples not explicitly described herein. The specific calibrations may be achieved using embodiments of the systems and contrast mechanisms described above.

### Process Beam/Workpiece Reference Frame Registration

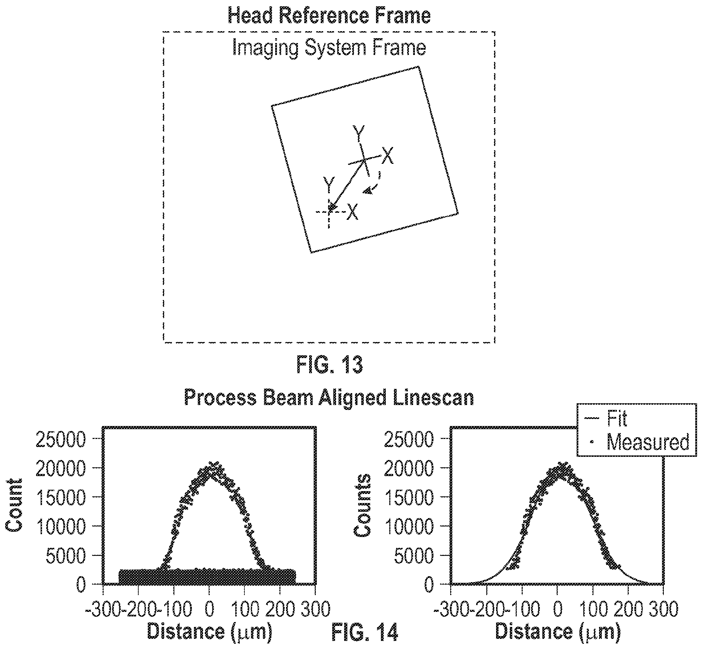

In CI system integration with laser heads, a process beam alignment/registration provides a meaningful origin for the CI system scanning module reference frame. The hardware origin (electrical/mechanical reference frame origin) of the imaging system scan module does not naturally coincide with the process beam center without calibration or alignment. Thus, a process beam center registration measurement is advantageous to align the imaging system scan module origin with the process beam center. As illustrated by the imaging system reference frame alignment shown in FIG. 13, calibrations may be used to align the CI system reference frame (imaging system frame) to the process beam/workpiece reference frame (head reference frame).

Measurement of the process beam center in the imaging system scan module XY frame provides the XY correction for the imaging system to center its reference frame about the process beam origin. Similar calibrations may be used to align the imaging system scan module XY orientation with the workpiece/head XY orientation and provide a scaling calibration to match the imaging system scan module XY scales to the workpiece/head XY scales.

Process beam center detection may be achieved through one or more of the proxies and contrast mechanisms described above (e.g., process radiation, workpiece surface demarcation and subsequent optical path length based sensing, workpiece surface demarcation and subsequent back-reflected beam intensity, etc.). Subsequent detection of the process beam center may be performed with one or more of the sensors described above. The examples below illustrate possible implementations of the process beam center alignment procedure but many other variations are possible.

In one implementation, the process beam is used to mark a small feature on a workpiece positioned underneath the head. The feature is marked small enough to localize its centroid to within an acceptable tolerance (e.g., ±10-20 µm), but is large enough to produce a distortion to the part surface (e.g., a deformation in height, a change in surface reflectivity, a change in polarization, etc.) that is detectable by the coherent measurement system. A distortion in which the maximum or minimum distortion coincides with the process beam center is generally desirable - for example, a laser ablation process wherein the resulting hole has a maximum depth that coincides with the process beam center. Other laser marks and/or spot welds can also be used. Materials for this calibration include anodized aluminum, aluminum, steel, stainless steel, copper, nickel plated copper and other commonly available metals. Polymers and graphite may also be used. Graphite, in particular, is advantageous because it does not have a liquid phase at regular atmospheric pressures. This means that the border of the laser mark is likely clearly defined and easy to segment with image processing algorithms. In one embodiment, the material that is marked is the product being manufactured on the cell, which allows for live recalibration and/or verification of the beam co-registration in production.

The imaging system scan module moves the imaging spot over the workpiece in a defined scan pattern and the desired measurement quantity (e.g., depth, intensity, etc.) is recorded at each location. The process beam center is identified as the imaging spot position, within the scan module reference frame, with the target signal value (e.g., a local maximum or minimum). Additional data processing techniques, such as fitting, averaging, and filtering, may also be employed to enhance detection accuracy.

A specific implementation of this process involves two measurement acquisitions of the calibration target - one prior to laser spot processing and one after laser processing. The pre-fire acquisition is obtained of an unprocessed calibration target, or an unprocessed region of a calibration target. The post-fire acquisition is acquired after performing laser processing to create a feature on the target. This process may be a marking type process or an ablative type process. Example laser processing parameters include: a 3 ms, 600 W pulse generated with a continuous wave single mode laser; and a 2 ms, 2000 W pulse with a continuous wave multi-mode laser. Material types of calibrations targets are described above. Each acquisition is a 4D data set representing back-reflected intensity as a function of 3D position in space and is obtained by performing coherent measurements while scanning the imaging beam over a rectangular raster pattern. The absolute difference between the acquisitions is calculated. A series of image processing operations (e.g., intensity thresholding, contour computation, and convex hull computation) is then performed to increase image contrast and to detect feature points.

A hierarchal filtration scheme, where each subsequent stage has fewer data points than the previous, is used to clean the data. This scheme is divided into pre-processing, feature points extraction, and geometrical fitting stages. The pre-processing stage utilizes nearest neighbor denoising and image intensity thresholding techniques to extract the biggest and most visible intensity blob in the acquired data. The feature points extraction stage depends on blob approximation and convex hull computation in order to compute the feature points in the extracted intensity blob from the previous stage. The geometrical fitting stage fits a circle to the extracted feature points - a bounding box and minimum enclosed circle are computed for the feature points extracted in the previous stage. Outputs of the geometrical fit are used to determine the process beam proxy location and assess the accuracy of the algorithm. The fit centroid is assigned as the process beam proxy location. The fit radius is used to determine the accuracy of the fit by comparison with an expected range of values governed by the processing beam spot size and process parameters.

Different scan patterns and search optimization strategies may be performed to enhance detection speed and accuracy, as shown in FIG. 7. Simple scan patterns include rectangular grids, circular grids, spiral grids, rectangular raster scanning, spiral scanning, and crosshair scan patterns. More complex searching may involve an iterative approach with progressively finer search positions, more complex search strategies including random walk, the use of a priori measurements, and the use of models.

Inputs to the calibration routine may include, for example, optical modelling of the nominal process beam and imaging beam paths through the laser head, a collection of previous calibration point values, and/or a collection of similar calibration point values. These inputs may be used to provide a starting point around which to center the calibration scan patterns outlined above. A more accurate starting center point may involve fewer measurement iterations to achieve the same level of calibration accuracy. A more concrete example involves the use of computational optical models to produce an imaging beam correction vector, to align the imaging beam to the processing beam near the workpiece surface, for the nominal optical configuration. A series of correction vectors may be generated for different optical configurations, such as scan mirror angles in a laser scan head or different defocus positions. The correction vector is used by the measurement system during its calibration routine to center a rectangular raster scanning pattern about the nominal corrected position (i.e., produced from the computational optical model). This increases the likelihood that the calibration proxy is located within the calibration measurement scan field of view, alleviating the need for search routines and iterative measurements for the same system calibration.

In another implementation, the process beam is used to create a blackbody radiation source on the surface of the workpiece via heating. The radiation source is most commonly a blackbody emitter, but in some implementations could be plasma generated by the process. Through careful selection of process parameters, it is possible to create a radiation source on the surface of the material without causing significant damage to the material itself. Such a process may be beneficial for target re-use, detection accuracy, and may even allow production parts to be used for the process. The use of production parts as the calibration target may allow for reduced downtime on high-throughput production lines and may enable more frequent re-calibrations. Since the blackbody source is primarily mediated by energy absorption and conduction into the bulk of the material, its apparent location should be extremely stable and symmetrical about the center of the process beam. This can provide a very accurate and repeatable registration of the beams.

Radiation produced by the source may be captured, as described above, using the coherent measurement system optics directly (e.g., system 100 shown in FIG. 1), using the cladding of a double clad fiber in combination with a photodiode (e.g., system 100'' shown in FIG. 3), a 2D inline camera (e.g., system 100' shown in FIG. 2), or some combination thereof. In the case of the direct coherent measurement system detection or the double clad fiber detection, the measurement spot is moved in a scan pattern, as described above, and the detected intensity is recorded at each position. The scan position associated with the maximum intensity (or a similar prominent feature, e.g., center of signal mass) is identified as the process beam origin. Spectral filtering may be applied to the process radiation before detection to improve accuracy.

An example of process radiation measurements recorded directly by the coherent measurement system during a line scan along one of the imaging system scan module axes is shown in FIG. 14. The process radiation line scan fit shown in FIG. 14 illustrates the process radiation measurements recorded by system 100 (left plot) and the data processing operations (right plot). The plot on the left shows the radiation intensity measurements as a function of the imaging system measurement position along its search axis. The right plot shows the result of additional data processing and fitting algorithms, such as noise rejection and curve fitting, to find the centroid. In this case, the fit centroid is representative of the process beam center position along the CI system scan axis. Here, the scan axis distance scale has been adjusted such that the zero position corresponds to the center of the fit to illustrate a corrected CI beam position.

In the case of the 2D inline camera, process radiation is recorded on the camera. The back-reflected imaging beam may be simultaneously, or subsequently, recorded on the camera (see FIG. 10). Possible sequencing of such detection is described in more detail above. If the inline camera has already been calibrated to the imaging system, then the imaging beam position correction may be used to directly calculate the corrections to the imaging beam scanning module. However, if no such calibration has been performed, additional acquisitions of the back-reflected imaging beam may be performed at different imaging beam positions (as directed by the scanning module) until the imaging beam positioning error (relative to the process beam center on the camera) has been sufficiently minimized. Additional data processing and spectral filtering may also be applied to improve performance.

In many implementations, the process beam center position is detected automatically, or with minimal user input, and is saved as a general system calibration.

Similar techniques may be used to identify and calibrate the CI system scaling and rotation, relative to a more convenient reference frame such as the laser head frame, the workpiece frame, or a world frame. While scaling and rotation are the primary corrective transformations used by a CI system, additional transformations, such as reflections and distortion corrections, may be desirable to improve positioning accuracy of the measurement system. Aspects of these calibration measurements may allow the same calibration process to be used to identify multiple transformation corrections for the CI system. However these transformation type calibration measurements may also be performed independently.

Transformation calibrations are generally more involved than a process beam origin type calibration due to the geometrical nature of the problem. They often involve creating more than one feature on the workpiece (or below the laser head), such as a mark or radiation emitter on a calibration target/workpiece. In order to determine a scaling factor, for example, two features of a known separation distance are created in the reference frame to which the CI system is to be aligned. The features are identified in the CI system reference frame and the separation distance between the features, in the CI frame, is determined. The ratio of the CI reference frame distance to the target reference frame distance is used to determine the corrective scaling factor of the CI system.

The same identified features may be used to determine the rotational correction desired for the CI system. If the features are marked, in reference to a known axis or set of axes in the target reference frame, then the feature locations relative to specific axes in the CI system reference frame can be used to calculate the rotation to align the two reference frames.

For these types of calibration processes, synchronization with the laser source and/or cell (e.g., through standard communication protocols or indirectly via a cell operator) may be advantageous.

The above procedures may be extended to include more complex feature generation in order to account for reference frame distortions and reflections - for example by creating features with distinct asymmetry about multiple axes in the target reference frame.

In some CI system optical path configurations, multiple transformation correction factors of similar type (e.g., multiple scaling factors) may be used to account for: multiple axes (not necessarily orthogonal) in the CI system reference frame; multiple axes (not necessarily orthogonal) in the target reference frame; optical distortion in the CI system beam path (e.g., optical distortions associated with the CI scanning module); optical distortion in the laser head beam path (e.g., lens distortions in a scan head); different geometries in the target reference frame (e.g., cylindrical versus spherical versus planar surfaces); and CI Scan Module Tracking Error.

The CI system scan module is used to position and scan the imaging beam relative to the target reference frame. Scanning is enabled by optical devices, which are subject to inertia and finite acceleration and/or slew rate constraints. As a result, the true position of the imaging beam lags behind the commanded position by a tracking error. In a simple form, the tracking error manifests as a constant time lag (e.g., 0.1 ms) of the imaging beam position behind the commanded position. Often the tracking error follows a more complex system response and often depends on the input drive commands themselves.

The examples presented herein illustrate the simplest form of the tracking error, but the outlined techniques may be extended to identify and correct more complex models of the tracking error. By creating a feature, or features, in the target reference frame (e.g., a height mark or process radiation emitter) and commanding the CI system scanning module to scan across the feature in different directions and along different axes, the tracking error may be determined.

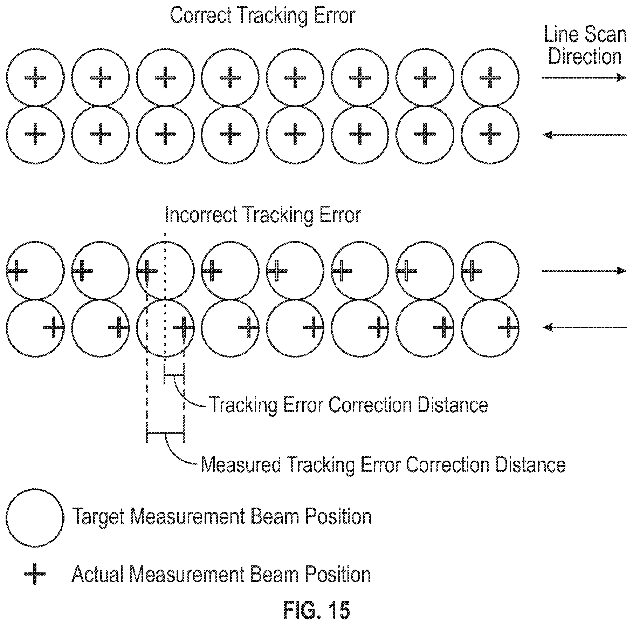

FIG. 15 illustrates the difference in positioning in the target reference frame when the tracking error is correctly accounted for versus incorrectly accounted for. In particular, the tracking error schematic shown in FIG. 15 highlights the difference in commanded imaging beam position and actual measurement beam position with correct and incorrect tracking errors when scanning in opposite directions. The incorrect tracking error case highlights how the distance between a static feature measured while scanning in one direction versus the other can be used to calculate the tracking error distance. When correctly calibrated, scans over the locations in the target reference frame produce the same measurement signal independent of the scan direction. When incorrectly calibrated, the actual position sampled in the target reference frame is systematically off relative to the commanded position in the same reference frame. Although the example in FIG. 15 shows the true position lagging behind the commanded position, it is possible that the true position may lead the commanded position for certain types of incorrect tracking errors.

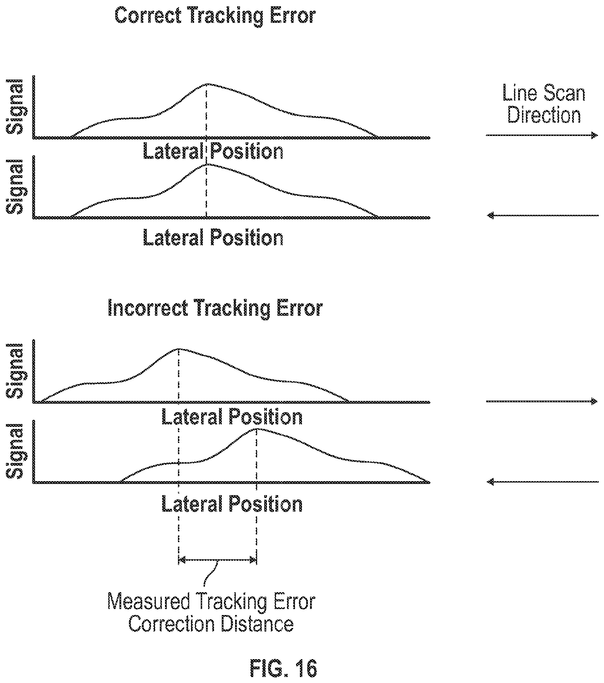

With the correct type of target and imaging system scanning pattern, an incorrect tracking error is identifiable in the measurement of the target reference frame feature of the imaging system (or auxiliary system), as shown in FIG. 16. In particular, FIG. 16 shows example signal measurements obtained while scanning over a static feature in two opposite directions using a correct tracking error (top) and an incorrect tracking error (bottom). As shown, scanning in one direction produces a peak signal, such as that associated with the peak emission intensity from a process radiation emitter, at one position/time in the CI system scan path, while scanning the same pattern over the same feature in the opposite direction, produces a peak at a different position/time in the CI system scan path. The difference in time/position in the scan path is used to determine the tracking error. In some cases, this difference is used in combination with additional knowledge or modelling of the scanning module or other CI system calibrations to determine the tracking error.

As identified previously, it is possible that the tracking error is dependent on aspects of the drive commands. Examples of such dependencies may include command speed, a command displacement, and scanning module axis. To improve CI system accuracy, multiple tracking error calibrations may be performed under different input conditions.

Similarly, in order to properly acquire tracking error calibration measurements, the CI system, and in some cases its auxiliary sensors, may be modified (relative to their measurement operating conditions) to collect the calibration measurement signals. For example, the CI system detector integration time may be extended or additional measurement averaging may be performed to achieve better SNR from the process radiation emitter. Special laser processes may also be implemented to generate such signals.

It may be sufficient to only perform the CI scan module tracking error calibration during production of the CI system. However, tracking error calibrations may be performed at the end-use application for improved measurement accuracy.

### CI Scan Module Long Term Drift

Engineering tolerances may result in long term drift of the CI system scanning module wherein the calibration accuracy (e.g., of the target reference frame registration, the tracking error, etc.) deteriorates over time. Changing environmental conditions, such as temperature, may accelerate the process.

In order to combat long term drift and ensure sufficient scan module positioning accuracy, the types of scan module calibrations described above may be performed periodically. A coherent measurement system that can automatically detect and implement the updated corrections greatly benefits the end-user. Automation and synchronization of the imaging system with the laser processing cell further simplifies the re-calibration sequence, allowing the generation and detection of the measurement to be performed automatically (or semi-automatically).

### Scanner Field Corrections

In fixed optics laser heads, a single process beam/workpiece reference origin registration may be sufficient as the process beam position relative to the laser head is fixed. However, further extensions in fixed optics implementations may involve multiple co-registrations for different defocus positions (e.g., different planes relative to the focal plane of the head).

Complications to the co-registration calibration process arise when the laser head involves beam scanning optics. Scanning optics allow the focus of the processing laser beam to move relative to the laser head. Examples of laser scan heads include, but are not limited to, the 2D High Power Scanner and 3D High Power Scanner available from IPG Photonics Corporation.

In such scanner based implementations, the imaging system reference frame may be registered to the process beam position (and reference frame) at multiple locations throughout the laser head scan field. In some applications, registration requirements may be relaxed by restricting the effective working area (or volume) of the scan field. Similarly, in applications with reduced registration precision requirements, calibrations at multiple locations within the scan field may not be necessary.

However, there are applications and scan head hardware where such additional registration may be desirable or advantageous. Example applications include single mode laser processing applications, such as keyhole welding of electric-mobility components, where the phase change region created on the workpiece surface by the narrow diameter single mode beam is small relative to the measurement system co-registration errors at different locations in the scan field. In such applications, a lack of additional calibration points may cause the measurement to be off target at one or more regions within the scan field. Relevant positioning scales for some applications may be on the order of a few microns to a few tens of microns.

Example hardware deployments where additional co-registration may be desirable or advantageous include systems where the measurement spectral band is different from the processing beam spectral band. In such systems, chromatic aberrations induced by various optical components within the head cause the measurement spot to deviate from the focal position of the processing beam by different amounts for different positions within the scan field. Such deviation may be large enough to cause measurements to be taken at incorrect positions relative to the phase change region or specific features on the workpiece.

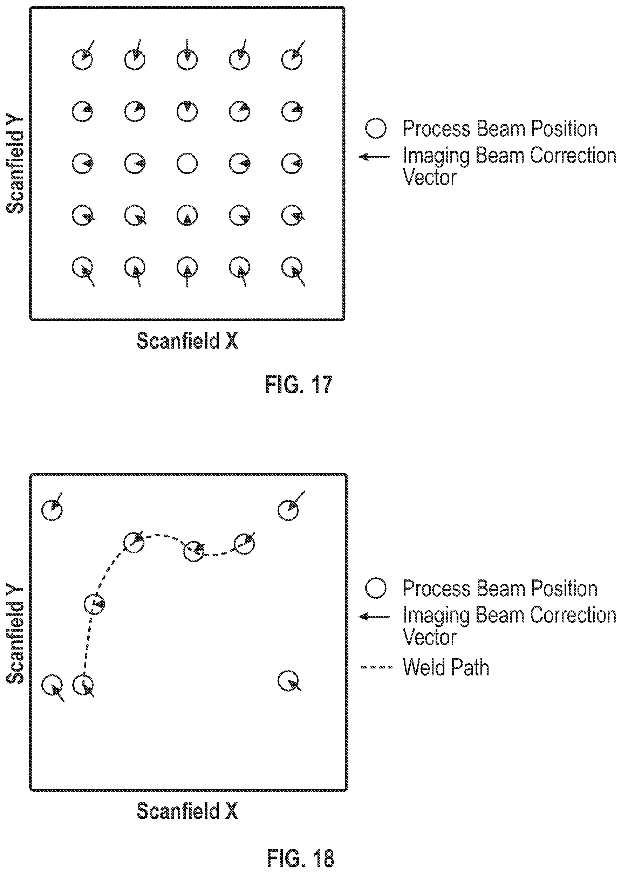

An example of the types of corrections that may be applied to the imaging system scan module positioning commands, as a function of scan field position, to correct for optical distortions in a laser scan head is shown in FIG. 17. This example illustrates the types of 2D corrections that may be used for a 2D scan head. Analogous 3D corrections may be used to correct for 3D scan heads.

In addition to scan field co-registration errors arising from chromatic effects, co-registration errors at different locations in the scan field may arise from other optical and geometrical effects. For example, misalignment of the CI measurement system beam path and the processing laser beam path through the laser head can result in similar scan field co-registration errors. Heat effects to the head, such as thermal lensing, may also produce co-registration errors.

Depending on the system and the application, a general calibration throughout the scan field may be sufficient to co-register the measurement and processing beams. However, in systems or applications involving a very high degree of co-registration, it may be desirable to perform more specific co-registration calibrations around the processing laser path, as shown in FIG. 18. FIG. 18 shows an example of path-specific imaging beam and process beam registration measurements for an apparatus involving a laser scan head. Specific calibrations may reduce the total calibration time (e.g., by limiting the calibration locations to those relevant to the process) and may improve accuracy (e.g., by introducing calibration locations between a coarser general calibration grid). As shown in the illustrated example, such calibrations may be performed at specific locations on the processing path and may be performed at positions around the path (e.g., a bounding perimeter).

Similar calibration measurements may be used to compensate for optical path length changes, and changes to measurement beam focus, associated with different positions within the scan field. Synchronization of the imaging system with the laser processing system facilitates such calibrations. In this case, synchronization with the system motion control (e.g., scanner position) may be used to automatically direct (or read) the processing laser focal position. Synchronization with the processing laser source, or its controller, may be used to indicate when a calibration process should be performed and when the imaging system is ready to perform the next calibration measurement.

### Primary Scanner Process Beam Tracking and Position Error

Similar to the CI system scanning module corrections, laser scan heads may also use corrections to account for their own tracking errors, optical distortions, mechanical alignments, and thermal effects. A laser processing system with an integrated coherent measurement system may make use of the CI measurement system (or its auxiliary detectors) to determine the laser head scanner corrections - the primary scanner corrections.

Similar strategies described above to calibrate the CI system can be used to perform a primary scanner calibration. For example, the primary scanner may be used to generate a series of calibration marks on a target below the laser head. The imaging system measurements (coherent, process radiation, or some combination thereof) may then be used to determine tracking or positioning errors associated with the primary scanner.

A more specific, non-limiting, example includes using the primary scanner to mark a series of points on a workpiece below the head while travelling in one direction and another series of points while travelling in the opposite direction. The CI measurement system scanning module can then be used, while the primary scanner is held at a static position, to perform coherent measurements of the marked surface. The height-based measurements of the coherent measurement system can be used to identify locations of the features marked on the workpiece surface. The positions of the features marked in one direction versus the other can then be used to identify the primary scanner tracking error.

The primary scanner may be used in place of (or in addition to) the CI system scanning module to position the measurement beam at specific locations on the workpiece for the purpose of calibration measurements. In this case, synchronization is provided between the primary scanner position and the imaging system measurements. While it may be useful to perform such measurements with a fully calibrated imaging system, primary scanner calibration measurements may be performed in such a way that a full imaging system calibration is not a prerequisite.

Primary scanner calibrations may only be performed upon system commissioning or production. However, in some cases, periodic calibration may be performed to combat optomechanical deterioration or changes in environmental conditions (e.g., thermal lensing).

### Dynamic Calibration

The systems described above may also be used to perform dynamic (i.e., process-specific) calibration measurements as described in the examples below. Such measurements are typically performed for each kind of laser processing application and for major changes to the application processing parameters. Calibrations/adjustments may also be performed continuously during the processing application to achieve high calibration accuracy as well as to reduce the laser station downtime (i.e., time not spent performing laser processing). Minimal system downtime is critical in many high-throughput laser processing production environments.

As with static calibrations, dynamic calibrations may also need to be performed periodically in high precision processes to compensate for equipment tolerance limitations, temperature drift, environmental fluctuations, mechanical vibrations, dynamic forces during production, etc.

Dynamic calibrations are also used to register imaging system measurements to aspects of the laser process that are specific to the laser process and/or the workpiece. Aspects of the laser process may be detected as part of the CI system dynamic calibration and fed back (or forward) to influence future CI measurements of specific aspects of the process. These aspects of the laser process include, without limitation, the following: process path geometry; process path speed; process path direction; process path tangent angle; process time; laser power temporal profiles; optical path length changes about the process path and its local proximity; workpiece offset from the laser head about the process path and local proximity; imaging system and process beam co-registration along the process path and local proximity; changes in measurement beam focal positions about the process path and local proximity; phase change region geometry; phase change region extents; phase change region position; phase change region radiation intensities (i.e., temperature); melt pool position; melt pool geometry; keyhole position; keyhole geometry; laser beam spot size; laser beam energy distribution; laser beam temporal characteristics (e.g., continuous wave vs pulsed, pulse width, pulse period, pulse frequency, pulse shape); measurement beam reflectivity profile (i.e., surface reflectivity and/or subsurface reflectivity); workpiece fiducial marks/references/datum; and measurement beam dispersion.

Dynamic calibrations may be performed by taking measurements of a similar process prior to the process in which process measurements (e.g., QA determinations). These calibration measurements may be stored such that they can be implemented for the target process. Changes to the target process generally prompt a re-calibration step.

In other dynamic calibration implementations, calibration measurements are performed during the process for which process measurements are performed. These calibration measurements may be performed immediately at the start of the process so that the remainder of the process can be monitored with a calibrated system. Calibration measurements may also be interspersed, or performed simultaneously, with process measurements for improved accuracy.

### Phase Change Region Measurements

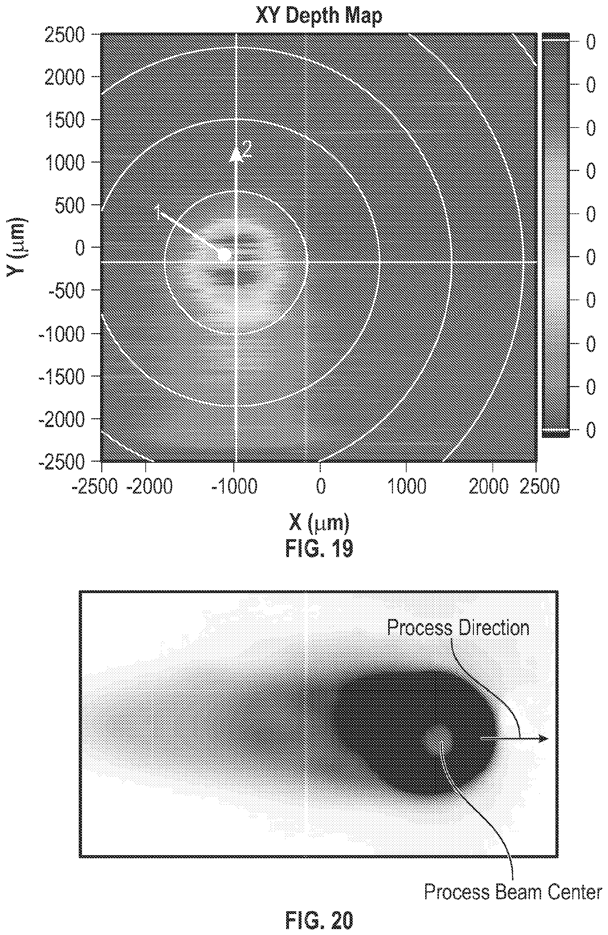

In addition to providing process monitoring quality determinations, measurements of the phase change region may also be used to provide dynamic measurement system calibration measurements. For example, process radiation measurements of the phase change region allow process beam co-registration calibration measurements to be performed during laser processing instead of taking the system offline. This may be used in applications with high throughput requirements. FIG. 19 shows how a coherent imaging system employing a double clad fiber in combination with an auxiliary photodiode (e.g., system 100'' shown in FIG. 3) can be used to determine the process beam center location (1) during a laser process. In this example, the double clad fiber may include a Double-Clad Fiber Coupler manufactured by Castor Optics. Similarly, FIG. 20 illustrates how 2D inline camera measurements (e.g., using system 100' shown in FIG. 2) of the phase change region and coherent measurement beam may also be used to determine process beam registration during a laser processing application. Similar measurements may be made using other contrast mechanisms, for example the CI system optical path measurement, to determine process beam alignment during processing.

Measurements of the phase change region may be used, directly or indirectly, to perform other process-based calibrations. For example, FIG. 19 shows how the tail region of the phase change region (PCR) may be detected by a double clad fiber setup and used to determine the process direction/tangent angle (2). Such a measurement is typically dependent on the existence of an imaging system reference frame calibration to the target reference frame. Similarly, FIG. 20 shows how a 2D inline camera image of the process may be used to identify the process direction from the PCR tail region. Such a process generally involves an additional calibration step to register the inline camera reference frame to at least one of the imaging system, scan head, and workpiece reference frames.

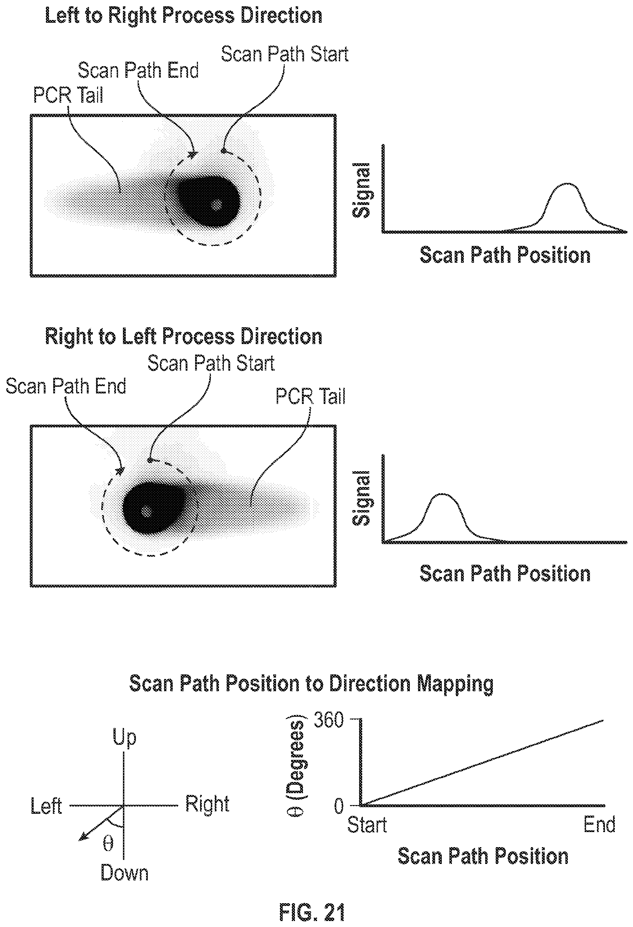

FIG. 21 indicates how a point-based measurement (e.g., coherent height measurement, process emission measurement through the coherent system, process emission measurement through a double clad fiber) may be scanned about the PCR. By synchronizing the single point measurement to the position around a circular (or similar) scan module scan pattern, the resulting signal and features in the measurement signal profile may be used to identify the direction of the PCR tail centerline, and therefore the process direction. The centerline may be identifiable via a local maximum or peak (as shown in FIG. 21) in the signal as a function of position in the scan path. The position in the scan path may then be mapped to the CI system reference frame to determine the quasi-instantaneous path direction in the CI system reference frame (e.g., to the right in the top example and to the left in the bottom example).

Similarly, measurements of the PCR tail length may be used to identify process speed or changes in process speed. The length of the PCR tail generally increases with process speed. However, the exact nature may depend on other process factors such as material type, material geometry, laser spot size, and assist gas. A priori knowledge of such relationships, or process modelling (e.g., based on cooling rates), may be used with tail length measurements to determine process speed. Process speed may then be used to direct the measurement system to measure at specific positions or times before or after the process.

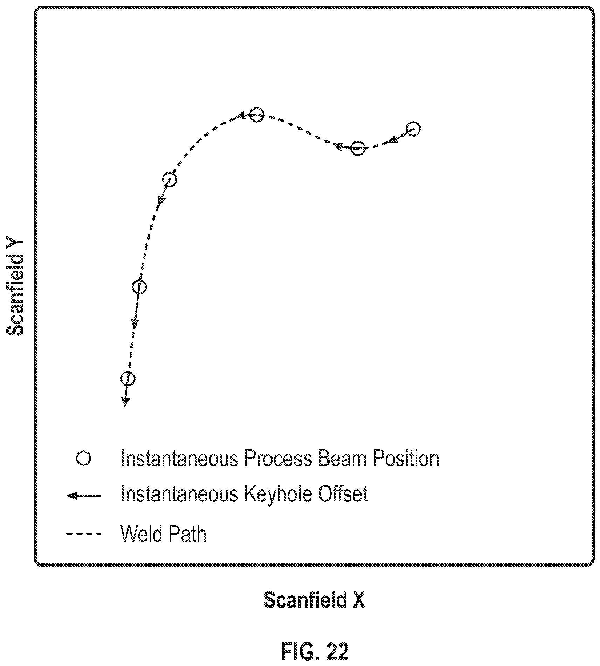

Measurements of other aspects of the phase change region may be crucial for measurement positioning during specific laser processing applications. For example, in keyhole laser welding, alignment of the measurement beam to the vapor channel formed during welding is established to perform keyhole depth measurements using a coherent imaging system. Changes to the keyhole laser welding process, such changes in process velocity, may cause the location of the vapor channel to change with respect to the process beam focal position, as shown in FIG. 22. As illustrated in FIG. 22, increases in weld speed may result in an increased lagging distance of the vapor channel position behind the processing beam. Similarly, changes in weld direction may result in a change in direction of the vapor channel lag behind the process beam. Additional process effects, such as changes in material geometry or composition or periodic wobbling of the process beam, may also cause changes to the vapor channel position. Calibration measurements of the vapor channel position at one or more positions along the weld path are beneficial to achieving measurement beam positioning for keyhole depth measurements and may be used to set the imaging beam position for keyhole depth measurements during the same process or for subsequent processes.

The CI measurement system measurements may be used to identify the position of the vapor channel based on the occurrence of a specific depth feature (e.g., the deepest measured depth, a clustering of points at a specific depth, measurements with specific types of depth variations, measurements with specific signal intensity levels or variations, etc.). Process radiation measurements may also be used to identify the vapor channel position. Such measurements may include, peak radiation levels, specific variations in radiation levels, radiation of one or more specific spectral bands, specific features in topographical radiation measurements of the PCR, etc.

Features analogous to the vapor channel in laser keyhole welding may be identified and calibrated in other laser processing applications such as additive manufacturing, marking, cleaning, and cutting.

### Pre-Processing and Post-Processing Calibration Measurements

Measurements of one or more features created on a workpiece as a result of a laser process, and measurements of one or more features of a workpiece intended to undergo laser processing, may also be used for dynamic system calibration. Such post-processing features may be measured by the system (with or without auxiliary sensors) by measuring sufficiently far behind the process in space or in time or both. Since measurements are performed after the laser process, measurements typically rely on height-based or external radiation intensity-based contrast mechanisms.

In many laser processing applications, the process produces a change (e.g., in height, reflectivity, polarization, material density, etc.) that is detectable by a coherent measurement system or an auxiliary detector. Examples include a weld bead in laser welding applications, a solidified bead in additive manufacturing, changes to glass reflectivity in scribing applications, and a region of removed material in laser cleaning. By performing measurements at specific positions relative to the process beam reference frame origin and with specific measurement scanning patterns, additional features of the laser process may be determined and used to direct future measurement system positioning. These dynamic calibration measurements may be used to construct a laser processing path, and other laser processing calibrations, with limited or no a priori knowledge of the path.

In other cases, calibration measurements may be used to determine the corrections to apply to a set of nominal process parameters to correct for nonidealities in process. For example, the coherent measurement system may have access to a nominal processing path input to a laser scan head. However, physical limitations in the scan head (e.g., finite acceleration) may cause the true path to deviate slightly from the commanded version. Dynamic calibrations may be used to correct for these types of deviations.

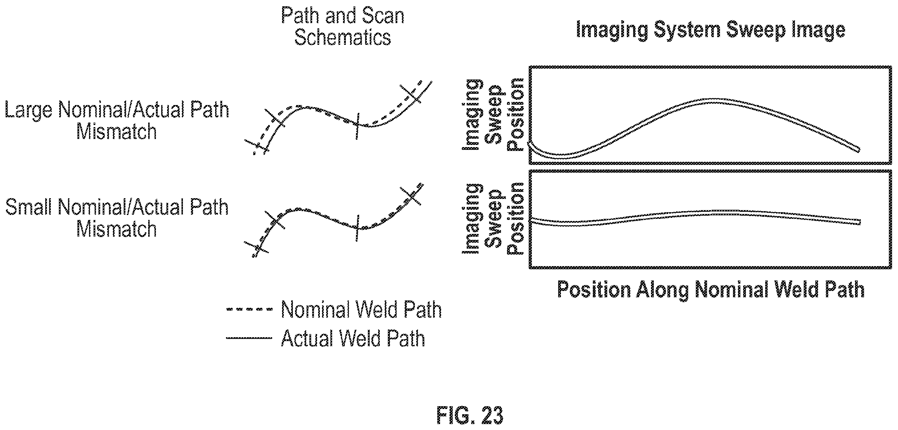

A specific example of these types of calibration measurements involves a series of linear sweeps of the coherent measurement beam perpendicular to, and centered on, the nominal weld path over the solidified weld bead (or similar markings along the weld path) while the motion control system (e.g., scan head, robot, linear stages, rotary stages, etc.) performs the motion path, as shown in FIG. 23. FIG. 23 shows how the use of measurement lines transverse to the nominal laser processing path can be used to identify the difference between the nominal and actual processing paths. The transverse sweeps are often offset (ahead or behind) from the processing beam along the weld path. In this example, height-based measurements of a feature created by the laser process (e.g., a marked line) are used as the calibration target.

If the true or actual motion path is the same as the nominal motion path (bottom schematic), the line appears centered in each of the transverse measurement profiles and the feature appears as a straight line in the center of the image that is reconstructed from the linear sweeps. As the discrepancy between the actual and nominal paths increases (top schematic), the position of the line within each transverse measurement profile varies according to deviations in path position and tangent angles. Deviations from the nominal motion path cause the feature to appear offset and/or distorted (e.g., wider) in the image. These deviations may evolve as a function of position along the path as misalignment between the nominal and actual paths can change as a function of position along the path.

The example illustrates path error detection using a height-based contrast mechanism. A similar strategy may be employed using back-reflected intensity-based contrast mechanisms, process radiation contrast mechanisms, or a combination of all three. Additional sets of perpendicular scans, at different leading and lagging distances from the process beam, during the motion path, may also be used to more accurately identify such motion path corrections.

The above example is a simple illustration of types of scan patterns and strategies used to identify laser processing motion paths. More complex scanning patterns may be used to construct the dynamic corrections. Other examples may also involve the use of coherent imaging speckle correlation, coherent imaging height measurement correlation, 2D inline camera image correlation, tracking operations similar to those in an optical computer mouse, detection of process emissions, or back-reflected light beams.

Examples of dynamic calibrations (identification and/or correction) that may be applied to the imaging system for monitoring laser processing applications include, without limitation: processing path error; processing path tangent angle; processing path speed; optical path length changes induced by beam delivery optics; laser interaction region extents; laser interaction region position; phase change region extents; phase change region position; workpiece tilt; and workpiece surface curvature.

For example, local workpiece surface tilt may be calibrated by performing a repeated circular scanning pattern of the measurement beam (within the scan module reference frame) while the laser station motion control systems (or laser scanning head) drive the process beam over its processing path. In most implementations, the process beam is disabled during this process so as not to damage the workpiece. The circular scanning pattern is typically performed at high frequency to achieve a large number of full circular periods measured during the laser processing path. The frequency is often governed by hardware limitations of the coherent imaging system scanning module.

For each circular scan, the CI system height measurements taken throughout the circle are mapped to their corresponding XY positions around the circular scan pattern. A planar fit to the XYZ data yields the tilt of the plane in the CI system reference frame. By performing a series of consecutive scans, the evolution of the plane tilt angle, as a function of position along the path (mapped to circular scan number) can be generated. The change in tilt angle, as a function of weld path, may then be used to modify the CI system measurement scan strategies and data processing algorithms while monitoring the laser process.

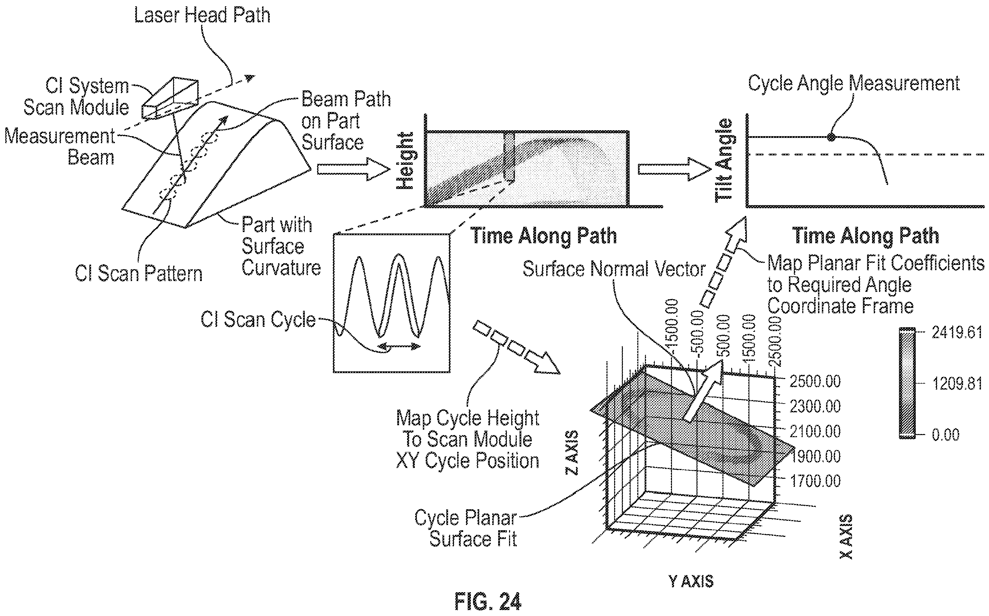

Such a local surface tilt calibration measurement process is shown in FIG. 24. While the laser head moves along its motion path trajectory over a part with surface curvature, as shown in FIG. 24, the CI system scan module scans the measurement beam in a periodic circular pattern taking CI measurements synchronized to the measurement beam position. In this example, the circular pattern is generated with respect to the CI system scan module reference frame (as opposed to the surface of the workpiece) to measure workpiece tilt with respect to the scan module reference frame. CI height measurements are mapped to their corresponding circular beam scan pattern iteration and are furthered mapped to their corresponding XY position within the pattern. Once CI height measurements within a cycle are mapped to their XY positions, a planar fit is applied to the data (X: X Position, Y: Y Position, Z: CI Height Measurement). From the planar fit coefficients, a surface normal vector, representing instantaneous local surface tilt, is generated. The surface normal vector is then mapped to a system convenient, angular coordinate frame (e.g., tilt angle along the weld path direction). This process is repeated for each scan cycle. A timestamp is assigned to each cycle (e.g., the time at which the midpoint of the cycle occurs with respect to the path start time), allowing surface tilt angle to be plotted as a function of time along the laser processing path. Tilt, as a function of processing path position, may be used by the CI system to provide CI system scan module positioning corrections and may be used to correct CI system height measurements (not shown).

While a circular scan pattern was used in this example, other scan patterns may also be used for this calibration. Such scan patterns may include, but are not limited to, sampling a finite number of points distributed about the XY scan field, scanning a crosshairs pattern, scanning a spiral pattern, and scanning a rectangular raster pattern. Any scan pattern that provides enough points (at least three) to reliably fit a surface to is sufficient for this calibration.

Similarly, while a planar fit was used in this example, other data processing algorithms and surface fitting techniques may be used for this calibration. For example, more involved surface curvature fits may be used to identify a first order tilt correction as well as further surface distortion. Data processing and fitting techniques may take an iterative approach or may perform direct calculations. Any processing technique that produces one or more surface tilt or curvature metrics is sufficient for this calibration.

### Processing Beam Wobble Pattern Identification and Registration

For certain types of laser processing applications (e.g., welding of highly reflective metals such as copper or aluminum), it is common to wobble the process beam in a small periodic manner to improve process outcomes. Similar measurement techniques to those described above may be used to specifically identify aspects of the wobble process to improve registration of the measurement beam relative to the wobbling process beam. These measurements may also be used to influence how measurement data is subsequently processed and analyzed. Examples of relevant aspects of the wobble process include, without limitation: wobble phase; wobble shape; wobble period; geometrical deviations from the nominal wobble shape; and changes to the phase change region induced by the wobble process.

### Example Workflows Benefiting from Calibration Measurements

The following section provides examples of the types of workflows that benefit from, or are enabled by, the calibration measurements described above. The workflows described here may be realized by interchanging the apparatus embodiments, contrast mechanisms, and calibration types described above. Similarly the workflows may also be realized through the use of different communication methods, such as those described below.

### Automated Calibration Processes and Cell Synchronization

The automation, and even semi-automation, of many of the calibration processes identified herein provides numerous benefits to the end-user. Automation minimizes the user interaction with the laser processing system and imaging system. This translates to the end-user using fewer resources to operate the equipment (e.g., fewer trained personnel, less training, less time, etc.). Minimal user interaction also results in a reduced risk of, or reduced consequences for, user error. User error during a system calibration process can have consequences for measurement accuracy and process reliability as this error is propagated to all subsequent measurements performed by the system. Similarly, automation reduces the total time to perform a calibration and allows calibrations to be performed at instances in time that are more convenient to the laser process or production environment, rather than at times that are more convenient to operators.

Different calibration processes involve different levels of synchronization between the laser processing system and the imaging system. Synchronization may be achieved through direct communication or signaling between the laser processing system and the imaging system or may be achieved indirectly via communication with one or more process controllers. Synchronization between the processing and imaging systems may include, but are not limited to, one or more of the following: imaging system control of the processing laser position; imaging system control of the processing laser power profile; imaging system control of predefined processing laser jobs; imaging system synchronization to the processing laser position; imaging system synchronization to the processing laser power profile; imaging system synchronization to predefined processing laser jobs; and predefined processing laser jobs matched to predefined imaging system calibration jobs and synchronized via a common start signal. Forms of synchronization may include, without limitation: a common external start signal; a common external sync signal; user configuration of corresponding imaging and processing system jobs; positioning signals; power profile signals; digital signals; analog signals; optical signals; optical signals generated by the laser process itself; and common industrial communication protocols (e.g., TCP/IP, Ethernet-IP, Profinet, etc.).

Synchronization may also be used to ensure the imaging system receives enough signal for the calibration measurement. It may also be used to ensure that the laser processing performed for the calibration does not produce too much damage to the calibration workpiece.

In addition to calibration of the processing and imaging systems, synchronization between the measurement system and the processing system/cell may also be used to compensate for deterioration in processing performance over time. General wear and tear of the laser processing station components (e.g., optics, fixturing, gas delivery systems) may slowly degrade laser processing performance with continued system use. Measurements of the laser processing station performance by the imaging system may be used to identify such degradation (e.g., through reduced process radiation levels) and correct the system performance (e.g., increasing the commanded laser power to compensate, automatically replacing system components, providing an indication to the user, etc.). Similar detection and correction may be performed for process-induced damage to the station, such as contamination of laser head protective optics by process ejecta.

### Calibration at Time of Manufacturing

At time of manufacture, it is common for coherent imaging systems to undergo calibration operations to improve the accuracy of the measurement system. For example, subcomponent variability, such as is introduced as a result of design tolerances and their own manufacturing variability, is measured and calibrated.

When possible, calibration of the CI system is performed with the measurement system integrated into the laser head that will be used in the laser processing application. However, due to real-world limitations, integration with the laser head before the CI system arrives at its end-use location is not always possible. In this case, CI calibration may be performed with the same model of laser head, a similar type of laser head, or a substitute calibration head. Deviations between the laser head used for calibration and the end-use laser head may be negligible and no further calibration is performed on system commissioning. In some applications, such as those with high-precision requirements, further calibration operations may be performed on system commissioning, as well be described below.

The following example illustrates aspects of the calibration process pertaining to the integration of a CI system into a laser scan head. The order of the calibration processes described herein is not a limitation, and in some implementations, certain calibration operations may be performed in parallel.

Before the calibration process is performed, the CI system is mechanically integrated with the laser scan head. Some laser heads, such as those available from IPG Photonics Corporation, include a port dedicated to CI system integration. Other laser heads may need interfacing hardware to attach the CI system to an existing inline camera (or other sensor) port. Other laser heads may include physical modifications to mechanical adjust points, optical beam paths, and delivery optics to accommodate the coherent imaging system.

Following mechanical integration, the electrical and communication interfaces with the laser head and CI system are established. In a fully automated calibration process, the laser head, CI system, laser source, and where applicable, cell motion control equipment, are all in communication (direct or indirect) with each other. The terminology for the components described herein refers to the specific piece of hardware and the hardware controllers.

In semi-automated calibration processes, some of the above communication links may be established, but a user is also involved in the process, providing the missing communication and synchronization elements. For example, when the laser head and CI systems are primed and ready to perform their calibration operation routines, the user may press a button to trigger the laser to fire. The laser, in turn, provides a synchronization signal to start the laser head and CI system operations.

In a fully automated environment, communication between the laser head, CI system, laser source, and motion control subsystems is generally controlled by a piece of equipment acting as the process master. The process master has knowledge of the various aspects of the laser process (or calibration process) and knows how the subsystems should be synchronized in order to achieve successful operation. In some applications, the process master may be realized by additional hardware, such as a programmable logic controller (PLC), a robot interface, an external computer/server, a smartphone, a tablet, or a microcontroller. In other applications, one of the subsystems (e.g., the laser head controller, the CI system controller, or the laser controller) may take on the role of the process master. Communication is often achieved directly via two-way communication between the process master and each subsystem. However, in some applications, some subsystems may be synchronized to other subsystems and communicate indirectly with the master. Communication may take the form of digital signaling, analog signaling, networking communication protocols (e.g., TCP/IP), or some combination thereof.

Once mechanical, electrical, and communication integration has been established, calibration procedures may be performed. A calibration target may be used at the working distance of the laser head. Once a calibration target has been setup by the user, or automatically by other equipment in the cell, the user, or the cell, indicates to the process master (PM) that a target is in place. The PM commands the CI system to automatically perform its depth of field calibration, which may include adjusting CI system delivery optics to better focus the measurement beam on the workpiece and may include adjusting reference optical paths within the CI system to better match the laser head beam delivery path. During the depth of field calibration, the CI system performs measurements of the calibration target, and electromechanically adjusts its own subcomponents based on the measurements. In most calibration routines, electromechanical adjustment and subsequent measurement are performed iteratively until the resulting measurement is sufficiently optimized or reaches a target value. Once the calibration is complete, the CI system signals the PM.

During this calibration routine, laser head scanning functionality and laser output are not required. The PM leaves these subsystems powered off or in an idle state such that their operations do not affect the calibration process.

The CI system scan module tracking error calibration may be similarly automatically calibrated. In some tracking error calibrations, only a calibration target and the CI system are performed. In these calibrations, a calibration target with specific features (e.g., sharp edges) is set up below the laser head. Once the target has been set up, the PM commands the system to perform its tracking error calibration. Tracking error calibration measurements may be performed as described and illustrated previously. In an automated environment, the calibration measurements are processed by the CI system and are fed back to the CI system to adjust its scan module behavior accordingly. In some cases, mapping between the calibration measurement and the scan module behavior changes may be sufficiently known that a non-iterative approach is sufficient. However, in other cases calibration measurements and scan module behavior adjustments are performed iteratively until the tracking error is sufficiently calibrated. Once the calibration is complete, the CI system signals the PM.

In some tracking error calibration routines, the calibration target may not have specific features designed for the calibration. In these cases the laser head, laser, motion control equipment, or some combination thereof, may be used to create the specific feature used for tracking error calibration. In these cases, the PM communicates to both the CI system and the feature creating equipment to ensure that the feature is created in a specified location or at a specified time to allow the calibration to be performed. In some cases, this may involve marking similar features on the calibration target with the laser, and communication of the location (in space and/or time) of these features to the CI system so that it knows when and where to perform its calibration routine. In the case where process radiation (as opposed to a feature more permanently marked on the material surface) is used to create the measurement signal for the calibration measurement, precise temporal synchronization between the laser firing events and the CI system is desirable to ensure that CI system measurements are performed when process radiation is emitted.

The PM may communicate specific process parameters to the laser, laser head, and motion control equipment as desired to enhance the signal detected by the CI system. These parameters may be known a priori, or they may be optimized via feedback from the CI system. For example, the PM may fire the laser with a known parameter set, command the CI system to perform its measurement, receive feedback from the CI system regarding measurement signal levels (e.g., no signal, low signal, good signal, high signal), then adjust the laser parameters accordingly. Once the tracking error is calibrated, it is used by the CI system to more accurately synchronize CI measurements to CI scan module commanded positions and ultimately measurement positions on the workpiece. Instead of direct low level control of the process parameters by the PM, each subsystem may have predefined sets of process parameters (i.e., jobs) which are called by the PM in response to feedback from the CI system.

Process beam and workpiece reference frame registration may be similarly automated through synchronization between a process master and the appropriate subsystems. An automated version of these calibration routines may be realized as follows. The PM signals to the cell to automatically load a calibration target below the head. This may be realized by an automatic robotic arm or by notification to a cell operator. The cell then responds to the PM (e.g., through response from the robot or input by the cell operator) to indicate that the target has been loaded. Once the target has been loaded, the PM signals the laser scan head to position the laser beam to its own reference frame origin. In some cases, accurate process beam coregistration may involve an initial CI system "pre-scan" to acquire back ground signal levels or reference geometries. In these cases, the PM the signals the CI system to perform the pre-scan measurements. Once measurements are complete, the CI system signals the PM. The PM then signals the laser to operate to generate the process beam proxy signal for the CI system, for example, as described above. In some implementations the laser is operated to ablate the calibration target and the CI system measures the resulting ablated feature. In other implementations, process radiation measurements of the laser interaction zone are performed by the CI system while the laser is operating (or just after the laser has been operated). The PM is responsible for synchronizing CI system measurements (e.g., through an acquisition signal such as a digital rising edge) to the laser operation. Once the CI system has completed the calibration measurements, it signals the PM accordingly. The CI system uses this calibration to recenter its reference frame accordingly and perform subsequent measurements in a process beam centric frame.

As described above, in addition to signaling calibration complete, the CI system may also provide feedback to the PM based on measurement signal levels/quality. The PM, in turn, adjusts the processing parameters of the laser to improve measurement signal levels. This feedback may be provided and implemented during the calibration procedure itself or after the calibration measurements are complete so that the calibration process may be restarted with improved operating conditions. For some calibrations, the routine may be performed multiple times to make use of statistical data processing (e.g., averaging) or fitting to improve the calibration outcome. For each iteration, the same calibration target region may be used, a new location on the target may be used, or a new target may be used.

Workpiece reference frame orientation and scaling calibrations are performed similarly. The PM signals the cell to load the calibration target (or shift the target to a new location). The cell responds to the PM when the target is ready. The PM then directs the laser scan head to mark a pattern (e.g., a plus sign or similar feature) to indicate the scan head coordinate axes on the workpiece. Once completed the head signals the PM, which in turn directs the CI system to perform its calibration measurements. One such example may be the CI system performing a series of coherent measurements while its scan module drives the measurement beam along a rectangular raster scan pattern over the marked feature. The CI system data processing unit then unwinds the coherent measurements to map them back to the rectangular grid on the surface of the part and uses image processing algorithms to identify features of the pattern marked on the workpiece surface. The CI system then calculates the orientation and scaling of these features relative to its own reference frame. The CI system then uses this information to update its own reference frame calibration. Once the calibration is complete, the CI system signals the PM. The CI system automatically applies these reference frame calibrations to its subsequent measurement operations and scanning module commands to achieve measurement beam positioning in the target reference frame.

As multiple calibration sequences are generally used by the CI system, the CI system may keep track of its own calibration status to indicate, for example, which calibrations have been performed, when certain calibrations have been performed or updated, which calibrations are still to be performed, and which calibrations are due for an update in the future. Once a calibration is complete, it is applied by the CI system to perform calibrated measurements of laser processing applications. The PM or the cell may also keep track of the CI system calibration status. The CI system manufacturer may use this information to identify when a system is fully calibrated.

For applications involving CI system integration into a laser scan head, it is often advantageous to perform co-registrations of the CI system measurement beam to the laser beam at multiple locations throughout the laser scan head's scan field - to accommodate for optical distortions such as chromatic aberration. Synchronization between process beam proxy generation for CI detection and the CI system measurement is achieved similarly to that described for the process beam registration process described above. Scan field calibration, however, involves additional automation considerations in order to synchronize the co-registration process to various locations about the scan field.

The PM may have knowledge of the scan field calibration positions. It may have this information pre-programmed or it may request the information from the laser scan head and/or CI system. Similarly, the laser scan head and CI system may have preloaded configuration settings for performing this type of calibration and the PM may be used to synchronize processing and measurement at each position within the scan field without knowing the precise scan field coordinates.

The PM directs the laser scan head and CI system to the first position within the scan field. It then performs a similar sequence of operations to the process beam co-registration step described above to achieve the synchronization between scan field position, laser firing, and CI measurement. Once the calibration has been completed for the first position the CI system signals the PM. The PM directs the scan head and the CI system to the next position where the process is repeated. This procedure is performed until the positions within the scan field have been calibrated. The CI system uses the scan field calibration to implement the CI system positioning corrections at various positions within the scan field. In most applications, the CI system involves signaling (directly from the scan head controller or indirectly via the PM) of the scan field position so that it may apply the appropriate scan field correction. The CI system may realize this correction using a look-up table generated by the calibration measurements or a model (e.g., a fit) of the calibration measurements.

Scan head applications may also involve CI system optical path length calibration measurements as a function of scan field position. In most laser scan heads, the optical path length of the CI system measurement beam changes as a function of scan field position - for example, due increased geometrical path lengths as the scan head deflects the beam outwards from its origin or due to changes in the amount of focusing optic thickness that the beam passes through at a given scanner position.

An optical path calibration may be automated similarly to the scan field process beam coregistration calibration. Synchronization to the laser is not required for this calibration. The PM commands the laser to an off or idle state. The PM signals the cell to load a flat calibration target, or a calibration target with a known surface curvature and tilt. Once the part is loaded, the cell signals the PM. The PM then directs the scan head to a specified position within the scan field and waits on an in position signal from the scan head. Once in position, the PM directs the CI system to perform its calibration measurement. This measurement is often in the form of an optical path length measurement. The measurement is then processed by the CI system to determine optical path deviation. In the case of a known curved or tilted surface, the CI system's processing unit performs the flattening corrections to the optical path deviation measurement. Optical path deviation is usually measured relative to the optical path length to the workpiece at the origin of the scan field. However, other references (e.g., a plane defocused from the scan head working plane by 2 mm) may be used.

Once the CI system has performed its measurement at a specific position, it signals the PM, which in turn signals the scan head to move to the next position and the process is repeated. Once the optical path calibration has been performed at the target points throughout the scan field, the CI system processing module creates a lookup table or model (e.g., fit) in order to implement optical path length corrections as a function of scan field position when performing process measurements. As performed for process beam co-registration about the scan field, the CI system uses knowledge of, and synchronization to, the scan field path during a laser processing application in order to implement the corrections. This is usually achieved via direct or indirect communication with either the PM or the scan head. This communication may be performed at various times including: before the process is started to give the CI system a chance to perform calculations to prepare for measurement of the process; in real time during the laser processing application; and after a test run of the application.

Similar calibration measurements may be performed about the scan field to calibrate the following: optical dispersion of the measurement beam as a function of scan field position; changes in the measurement beam focal distance as a function of scan field position; changes in workpiece reference frame scaling as a function of scan field position; and changes in workpiece reference frame rotation as a function of scan field position.

While the automated calibration procedures are described herein in the context of a completed cell assembly, it is possible to perform certain calibrations with only the relevant sub-systems and sub-modules. For example, the optical path calibration may be performed on a cell without an operational laser.

### System Commissioning

To limit the burden of work during system commissioning, as many calibration processes as possible may be performed at the time of manufacture. However, due to the constraints described above, it is not always possible to integrate the CI system with the cell or laser head prior to commissioning. Similarly, while a calibration may have been performed during manufacture of the system, recalibration of certain aspects of the system may be desired as a result of misalignments due to shipping and installation.

In general, the implementation of the calibration procedures during system commissioning mirrors that at the time of manufacture or a subset of the procedures. In this case, the process master may similarly be the CI system or a controller at the end-use location. Instead of performing some of the calibration routines in their entirety, automated commissioning checks may be performed to determine which calibrations are still accurate and which need recalibrating. These automated commissioning checks generally involve the same type of synchronization and communication between the various sub-systems and the process master as is performed for full calibrations. However, the operations are generally less time intensive. For example, a check of the optical path calibration may involve performing optical path deviation measurements at a small subset of the target points within the scan field. If these measurements agree with those taken during the system manufacture, then the calibration is deemed accurate. If the check fails, the optical path calibration is re-performed.

As described above, the CI system or process master may keep track of its calibration state for display to the individual commissioning the system. This may be used, for example, to inform the individual of the remaining procedures, may be used to block certain operations of the cell until the commissioning is complete, or may be used to provide an annunciation to the user that commissioning is complete. While the PM may be used to automate the commissioning process, limitations in cell signaling and communication schemes may involve some manual interaction (e.g., loading calibration targets and pressing a button when loaded).

### Measurement Job Calibration Monitoring and Updating

In laser processing applications, CI system measurements of the phase change region provide important information about the process. In many of these applications, CI measurements targeting specific subregions of the PCR are performed to achieve the target process information. For example, in keyhole laser welding, aligning the measurement beam to the vapor channel created on the welded part during the welding process is desirable for measuring keyhole depth.

In many laser welding processes, the position of the vapor channel relative to the processing beam is dependent on many factors including, without limitation: material type; material geometry; process speed; process power; process path; wobble patterns; shield gas deployment; plume suppression techniques; environmental conditions; and defocus. Often, a calibration to determine the vapor channel position relative to the process beam for a given process, or sub-region of a process, is performed by the CI system. Once this calibration has been established, it is often accurate for small perturbations to the process parameters and conditions described above. However, a recalibration of the vapor channel position may be desirable if there are large scale changes. Similar calibrations to aspects of the process parameter space may be performed in other laser processing applications.

In a laser processing cell with an integrated CI system, automated workflows may be set up to perform process-specific calibrations. In the case of keyhole alignments during laser welding, specific alignment jobs may be defined within the CI system. These alignment jobs may be run prior to each new type of process to determine the calibration. They may also be run periodically and interspersed with measurement jobs of the laser process to verify or update the calibration as desired.

A keyhole calibration job may be a sequence of coherent measurements about the process beam center targeting a specific coherent measurement signal feature (e.g., deepest depth, specific depth variation, specific depth range, specific intensity signal levels, etc.). Similarly, process radiation measurements, as described above, may also be used to perform the keyhole calibration measurements. Once the measurements are performed, the CI system processing unit performs the algorithms or image recognition routines to identify the specific calibration.

In addition to updating how the CI system positions its measurement beam to measure the vapor channel, keyhole calibration measurements may be used to assign a goodness metric to measurement jobs (or aspects of the measurement job) of the laser process. This goodness metric may be used as a confidence indicator for the output or may be used to provide an annunciation to the user or process master that operations should be stopped until a new calibration is applied.

In some embodiments of the apparatus, the CI system subcomponents may allow keyhole calibration measurements to be performed in parallel to keyhole measurements of the laser process itself. Here, there is no need for alternating or interspersed calibration measurements with target measurements of the process. Instead, keyhole calibration measurements may be performed during the process itself and applied to the CI system in real time or near real time.

It is also possible to perform such calibration measurements alongside the process measurement job through resource sharing techniques. For example, keyhole calibration measurements may be performed alongside keyhole depth measurements by adjusting the target position of the measurement beam, relative to the expected keyhole position, for a certain portion of the keyhole depth measurement period and at certain intervals. This signal may be compared against the nominal keyhole position signal to determine if an improved calibration exists. Such a comparison may be based on signal characteristics such as signal intensity, signal density, signal variation, etc.

While a process may be nominally constant, periodic keyhole recalibration may be desired due to uncontrolled changes to the process environment. These uncontrolled changes include, without limitation, thermal changes to the process equipment, mechanical wear to the process equipment, contamination to laser head optics, variations in process raw material and component specifications, process fixturing changes, thermal changes to the CI system, and mechanical changes to the CI system.

In some implementations, calibration measurements are performed by the CI system, processed by the CI system, and applied by the CI system automatically without user intervention. However, in other implementations, physical or regulatory constraints may involve some level of user interaction (e.g., acknowledging an updated calibration) before the new calibration is implemented.

### Automatic Process Maintenance, Logging, and User/External Communication

Automatic calibration measurements taken during a series of similar laser processes provides data to enable long term statistics generation, process trend analysis, and cell operational health monitoring. For example, by collecting backscattered intensity of the imaging beam off a workpiece surface over time it is possible see a decrease in intensity as a function of time. Decreased intensity may be associated with contamination of the laser head cover glass as more material is processed. Similarly, it may also be associated with an aging light source or more material contamination. By setting up additional calibration target points, such as those within the laser head and those below the laser head, it is possible to isolate sources of decreased intensity. Such isolation is useful in identifying a contaminated cover glass. Once identified, the CI system may provide an annunciation to the user directly, or indirectly via the process master, to indicate a new cover slide should be used. In other systems this signal may be automated such that the cover glass is replaced more frequently. The annunciation to the user may be in the form of visual signals on the cell (e.g., LEDs, displays), audio signals from the cell (e.g., chimes, buzzers), or electronic notifications (e.g., smartphone apps, tablet apps, wearable technology, PC programs, email).

Similarly, logging of other calibration measurements may be used to identify subtle process changes. For example, small changes to the keyhole position calibration over time may be associated with changes in process environments and part fixturing. These long term trends may be used to identify the source of the change and remedy the process and its equipment. Logging of process beam co-registration calibrations may be useful in identifying problems with optical components associated with beam delivery in the head. Trends may be compared over time and against other data sources to identify issues such as thermal lensing, damage to optical components, and loose optical components.

In many laser processing applications, knowledge of the process beam focal point allows process results of sufficient quality. Positioning the workpiece surface relative to the focal plane of a processing laser beam is important for proper energy coupling into the material during the process. Often, the material undergoing laser processing is positioned with its surface at the focal plane of the laser beam to maximize energy coupling at the material surface. However, it is also common to offset the material surface from the focal plane (often referred to as defocusing) to distribute the laser beam energy over a larger surface area. Those skilled in the art may intentionally defocus the beam into or away from the material. Similarly, the ability to register the spatial position of the laser spot over the surface of the workpiece may ensure that the target material region is subject to processing.

On a laser processing station with an integrated CI System, it is possible to use the CI System as a guidance system to localize the focal plane of the process beam, relative to the surface of the part, as well as localize the lateral (XY) position of the process beam spot over the surface of the material. The information provided by the CI System about the 3D focal point of the process beam may be used by a machine operator during setup over a new part or may be communicated automatically to a machine controller (e.g., a PLC, robot controller, scan head controller, etc.) to actuate the optical or mechanical adjustments to position the process beam focus in the desired position in relation to the workpiece. Such adjustments may be desirable for a wide variety of applications, including, but not limited to, high tolerance processes (e.g., laser processing with a single mode beam) and assembly line processes where material tolerance variation or process fixturing degradation may require active compensation from one part to the next.

For a CI System to be used as a guidance system, the CI System may be calibrated to the process beam focal plane and lateral position. Other examples illustrated herein outline possible techniques for calibrating to the process beam lateral position on the surface of a material. These techniques may also be applied in the following example to calibrate a CI system to the process beam 3D focus position. For simplicity, the example here includes scanning the CI system measurement beam in a rectangular pattern about the surface of a material and using the CI system height measurements to resolve a spot on the surface of the material marked by the process beam. However, other CI system measurement modalities (e.g., black body emission measurement) and other scan strategies may also be employed. Similarly, the CI System may communicate directly with the process controller to perform the calibration process automatically or in some cases may require user interaction. An example automated calibration process is described in greater detail below.

The process controller communicates with motion control equipment to position the laser head in relation to a calibration target or workpiece. This may involve loading a target material below the laser processing head or position the laser processing head in a new location to point at the target material.

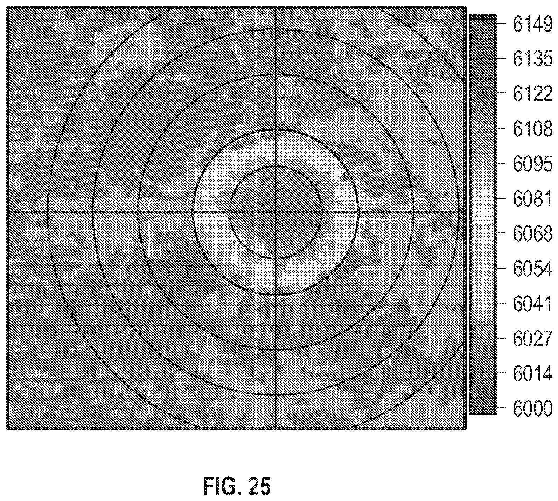

The process controller commands the laser (e.g., through digital signaling or standard communication protocols such as TCP/IP) to mark a spot on the target surface. The parameters of this process may be predefined by the controller, preset within the laser itself, or obtained through communication with the CI System. Once the spot has been made, the process controller commands the CI System to perform its calibration operation. The CI System may perform a rectangular (or other patterns as disclosed herein) scan over the surface of the part to capture the demarcated area on the surface of the workpiece, as shown in the image in FIG. 25.

Using contrast detection algorithms described herein, the CI system identifies a laser spot diameter (proxy) using imaging data it collects, as shown in FIG. 25. Although speckle appears in the image, the detection algorithms resist the effects of speckle and speckle size can be reduced by increasing the numerical aperture of the beam delivery system for the CI system.

Once the CI system calibration measurements are acquired, the CI system processes the information to automatically calculate quantities about the demarcated spot, such as its center position and diameter. Note that by fitting or centroid finding peaks on the axial measurements of the CI system, the effects of speckle and quantization noise in the image can be reduced. In some embodiments, a secure software feature allows the manufacturer to limit the axial resolution made available to end users in order to better comply with governmental regulations pertaining to device performance.

Further extensions to this procedure include iterative CI system scanning to tile different search areas and/or modify the scan area to better locate the spot. Similarly, the CI system may iteratively communicate with the process controller (or directly with the laser) to fire additional spots to enhance contrast or to provide more precise temporal synchronization to the laser processing event if necessary.

The spot XY center position is used as a proxy for the process beam lateral position on the surface of the workpiece. The diameter of the spot may be used as a proxy for process beam diameter at the surface of the material, although more indirectly as process thermal effects generally produce a much larger mark on a material surface than the process beam spot size.

Further extension to this calibration procedure includes performing a series of this type of calibration at varying laser head offset distances (i.e., the distance between the laser head and the workpiece surface).

This series of measurements generates spot (proxy) diameter as a function of offset distance. During such measurements, offset distance may be communicated to the CI system via the process controller or may be measured directly by the CI system itself (via its height measurement capability). For example, CI system height measurements near the periphery of the rectangular scan area (i.e., regions that do not contain the laser marked spot) may be averaged to produce a CI system measurement of the offset distance to the workpiece surface.

Spot (proxy) diameter as a function of offset distance is then analyzed to determine the focal plane of the laser beam. In some cases, this analysis may include finding the offset distance associated with the minimum spot diameter. In some cases, fitting this data to a function (e.g., a Gaussian beam width equation) may be used to increase calibration robustness.

In other calibration routines using different laser processes, other metrics as a function of offset distance may be used to identify the focal plane. Examples may include: maximizing black body radiation intensity, maximizing spot depth, maximizing spot size, maximizing spot height variation, minimizing spot height variation, maximizing black body radiation, maximizing black body emitter diameter, locally maximizing a black body emitter diameter, minimizing black body emitter diameter, maximizing spot symmetry (minimizing astigmatism), minimizing a laser scribed feature width, and maximizing a laser scribed feature width.

The same spot (proxy) diameter as a function of offset distance data may also be used to generate a proxy for the process beam caustic. This information may be further stored or analyzed by the CI system to produce an indication of the beam quality. The information may also be communicated to the laser cell, or a user, for external analysis. Beam quality analysis is useful during laser and cell commissioning operations to ensure proper functionality. Similarly, periodic beam quality measurement and analysis, or measurement and analysis following expected damaging behavior (e.g., generating spatter on the laser head coverglass, crashing mechanical systems), may be used to verify continued beam delivery quality and/or identify issues. Similar measurement and analysis may be used to identify sub-optimal beam delivery performance (e.g., thermal lensing producing a shift in focal position).

It should be noted that for certain energy beam parameter and material combinations, minima in the apparent spot (proxy) diameter may exist on one or more sides of the true process beam focus minimum. This is because at the highest intensity (tightest focus), some processes will initiate a keyhole (vapor capillary) mode sooner, and thus absorb more total energy, leading to a larger thermal effect and thus a larger apparent spot (proxy) diameter.

Regular measurements of a process beam calibration spot may also be used over time to track cell health and identify process issues. By logging calibration metrics (e.g., spot XY position, spot diameter, black body intensity, etc.) the CI system may analyze trends in the data to indicate potential issues in the beam delivery components. For example, coverglass optics may become contaminated by process ejecta and incur beam transmission problems over time. This may manifest as a smaller marked spot diameter, or in the blackbody case, a weaker black body emitter. Similarly, trends in logged metrics may be observed due to loose, damaged, or sub-optimal beam delivery optics. This information may be directly presented by the CI system (e.g., through an annunciation) or may be communicated to a CI system user or laser cell controller for external analysis.

All of these approaches apply variations of this principle: the same energy applied to the same material with the same temporal power profile should produce very similar results. If any of these measurements of the surface mark vary substantially over time, those variations are likely proxies to variations in performance of the laser source and the beam delivery system.

The process beam calibration process may be further combined with other CI system calibration measurements to reduce the number of steps or total time required for multiple calibrations. For example, unprocessed areas at the periphery of the rectangular scan area height map may be used to calibrate workpiece tilt and optical tilt introduced by different beam delivery paths (especially relevant in beam scanning laser heads). Similar logging of these additional CI system calibration metrics may be used to identify additional aspects of cell health and process issues (e.g., wear to cell fixturing).

During certain CI system calibration procedures, it may be sufficient to use a readily available material as the calibration target (e.g., sheet metal). For some CI system calibrations, the calibration target may be the workpiece undergoing laser material processing (i.e., a pre-production part) or a workpiece after it has undergone material processing (i.e., a post-production part). For other CI system calibrations, a manufactured calibrated target specific to the calibration may be required.

In some embodiments, the CI system and/or camera data is used to identify a direction of travel for a motion system (e.g. robot, linear axes or linear conveyor system) relative to the head. Similar CI system measurements may be used to identify workpiece placements, workpiece orientations, fixturing placement, and fixturing orientation relative to the head. This would allow precise calculation of so-called "welding-on-the-fly" or coordinated motion operations.

Finally, in some embodiments, the calibration target is rigidly attached to a non-workpiece object which would allow location and orientation of the non-workpiece object relative to the beam delivery and motion control (e.g. robot) systems.

### CI System Health Monitoring

In addition to being useful in identifying process problems and laser cell problems, automatic calibration measurements are useful in monitoring the status and health of the CI system itself. Calibration measurements may be performed periodically with the express purpose of determining the operation status of the CI system. Calibration measurements may be performed with the purpose of calibrating another aspect of the CI system but may also be used or repurposed to ascertain the CI system health, or changes in the CI system condition.

In general, too wide a grouping of repeated process beam alignments or other calibrations may be indicators of improper laser system or CI system performance, or an inadequacy in the automatic alignment process. In any of these events, embodiments of the present disclosure may utilize a threshold on the distribution of automatically calculated alignments as a trigger for an annunciation or external signal to request assistance or to stop further processing until the fault condition can be remedied.

Back-reflection measurements from calibration targets within the head may be used for identification of an aging light source. Decaying light source output power trends may then be fed back to the CI system to increase light source drive current, or similarly command a higher nominal output power, to achieve similar output power levels as performance degrades over time.

Similar calibrations may be used to detect and implement corrective actions for the following: the condition of the coherent systems reference optical path (e.g., changes in length, refractive index, transmission, dispersion, etc.); the condition of the coherent system sample optical path (e.g., changes in length, refractive index, transmission, dispersion, etc.); spectral misalignments or calibration issues in the CI system detector; and detect spectral instabilities in the CI system light source.

In the above examples, the corrective action or actions may be used to remedy the issue and allow the CI system to continue functioning properly. However, in other cases, the corrective actions may have already been applied and can no longer be applied again (e.g., maxing out on the light source drive current), or no remedying action can be applied. In this case, the corrective action may be providing a notification to the process master and/or user to indicate that the system is no longer functioning correctly and needs servicing or replacing. In some instances this signal may be used to switch over to a spare CI system or spare system subcomponents.

Monitoring trends in system calibration data may be collected and analyzed to build statistics on calibration stability and achieve probabilistic failure mode and effects analysis (FMEA) data. For example, in laser keyhole welding, keyhole alignment calibration data may be used to determine alignment stability for a specific laser welding process. The effects of small changes in alignment on CI system measurement quality may be characterized and used to determine the desired frequency of recalibration. Welding processes that are very sensitive to keyhole misalignment may involve more frequent recalibration. Similarly, welding processes that are very sensitive to keyhole misalignment are often more unstable processes. In this case, keyhole alignment calibration data may be used as a proxy to indicate the stability of the welding process in general and may be used as determination for process quality and the need for further optimization. When the CI system determines that a specific recalibration is desired or that a calibration is no longer accurate, it may automatically perform the calibration routine, or it may provide an indication to the cell or user that such a procedure should be performed for continued operation.

### Machine readable code recognition

In many industries, it is useful to incorporate part identification markers, such as barcodes or QR codes on the surfaces of products, components, and subcomponents. Such identification markers may be useful for inventory tracking, product end-use tracking, provenance sourcing, and security markings.

In some applications, a CI system may be utilized for such identification marker scanning. A CI system calibration may be used to achieve proper measurement beam scan strategies and measurement processing algorithms (or configurations) to reliably recognize the identification marker. Calibration, for example, may be used to accommodate different material backgrounds, identification marker colors, identification marker height/depths, identification marker locations, and identification marker sizes. In the case where these markings were part of a quality control system, the CI system would be able to capture the marking data and correlate it to other CI system measurements taken before, during and after when the marking was measured.

A CI system may also be used as part of the generation process for such identification markers. For example, the CI system may be used to measure a marker and determine if it is of sufficient depth/height or of sufficient discoloration. Outputs from the CI system may be fed back during the identification marker processing stage to modify the marking process. A common realization of this process is in the context of laser generated identification markers (e.g., laser marking or laser scribing processes). The laser that marks the workpiece may be the same laser that performs the laser processing of the workpiece. The marking may occur in the context of the laser processing environment or may be performed before or after the process itself.

In some embodiments, a CI system may be used as the identification marker reader. It may be beneficial for some identification marks to be invisible to traditional readers (e.g., barcode readers, camera, LED scanners). These marks may be used, for example, to hide product identifiers for security or aesthetic purposes. A CI system may be used to guide the laser process in generating such marks and to provide feedback on the quality of the generation process. Such marks may be generated by marking features on the surface of a material that primarily lend themselves to CI measurement detection (e.g., submicron features). For optically transparent, or semitransparent, materials (at the CI measurement beam or process beam colors), such features may be marked below the surface of the material. Subsurface features may be beneficial for marking plastics, glass, or semi-precious and precious stones. When reading these features, the CI system would optionally calibrate the tilt of presentation of the part and/or optical path length distortion from optical media that the CI system measurement beam traversed (e.g. lenses, air, water, oil, etc.).

In an embodiment, a pulsed laser, or stamp is used to very accurately structure a 3D QR code or barcode in relief on the surface of a workpiece, but the height variation between the negative and positive parts of the pattern is so small (10 um or less, or 50 um or less) and the transitions so gradual that they cannot be read by conventional readers or perhaps even identified by the naked eye. If sufficient control of the engraving/stamping system is possible, then it may be possible to encode multiple value levels in each transverse location of the 3D QR or barcode, thus considerably increasing the data density that could be produced per unit of surface area on the workpiece.

Optionally, this code could be coated over to protect it from scratching or other damage. This coating might be opaque to visible light (but transparent to the CI system) to make visual identification even more difficult. The sheer difficulty of producing these features would make them useful for anti-counterfeiting applications.

While the principles of the invention have been described herein, it is to be understood by those skilled in the art that this description is made only by way of example and not as a limitation as to the scope of the invention. Other embodiments are contemplated within the scope of the present invention in addition to the exemplary embodiments shown and described herein. Modifications and substitutions by one of ordinary skill in the art are considered to be within the scope of the present invention, which is not to be limited except by the following claims.

## Claims

1. A system (100, 100', 100", 100‴) comprising:
a material processing system including a processing beam source (110) for generating a processing beam (111) and a processing beam head (112) for delivering the processing beam (111) to a target;
a coherence imaging (CI) measurement system including a coherence imaging (CI) core unit (120) for generating a measurement beam (121) and a CI scan module for delivering the measurement beam (121) to the target, wherein the CI measurement system produces a CI measurement output; and
at least one controller (156) configured to receive the CI measurement output from the CI core unit (120) for monitoring and/or controlling the material processing system, wherein the controller (156) is also configured to receive a calibration measurement output and to control the CI measurement system based, at least in part, on the calibration measurement output, wherein the controller (156) is configured to control the CI measurement system to modify future measurements made by the CI measurement system for alignment of the CI measurement system and the processing beam (111); and
wherein the CI measurement system produces the calibration measurement output, and
**characterized in that** process radiation produced by the processing beam (111) is used as the contrast mechanism to produce the calibration output from the CI measurement system.

2. The system (100, 100', 100", 100‴) of claim 1 further including a 2D inline camera coupled to the processing head, and wherein the 2D inline camera generates image data used to produce the calibration measurement output.

3. The system (100, 100', 100", 100‴) of claim 2 wherein the 2D inline camera shares an optical path with the CI measurement system, and wherein back reflected light is split between the 2D inline camera and the CI measurement system.

4. The system (100, 100', 100", 100‴) of claim 1 further including a double clad fiber coupled to the CI core unit (120) and to a photodetector, wherein the double clad fiber is configured to transmit process radiation to the photodetector and to transmit light from the measurement beam (121) to the CI core unit (120).

5. The system (100, 100', 100", 100‴) of claim 4 wherein the calibration measurement output is produced by the photodetector.

6. The system (100, 100', 100", 100‴) of claim 1 further including a 2D camera positioned proximate the target, and wherein the 2D camera generates image data used to produce the calibration measurement output.

7. The system (100, 100', 100", 100‴) of claim 1 wherein the material processing system includes a laser processing system.

8. The system (100, 100', 100", 100‴) of claim 7 wherein the laser processing system includes a laser with an output substantially of a single spatial mode with an M-squared value of less than 2.0.

9. The system (100, 100', 100", 100‴) of claim 1 wherein the CI measurement system includes an inline coherent imaging (ICI) system.

10. A method for calibrating a coherence imaging (CI) measurement system, comprising:
providing a material processing system configured to generate and deliver a processing beam (111) to a target;
providing a coherence imaging (CI) measurement system configured to generate and deliver a measurement beam (121) to the target and configured to provide a CI measurement system output for controlling and/or monitoring the material processing system;
obtaining a calibration measurement output from the CI measurement system and/or from an auxiliary sensor; and
automatically controlling the CI measurement system based on, at least in part, the calibration measurement output, wherein the CI measurement system is controlled to modify future measurements made by the CI measurement system for alignment of the CI measurement system and the processing beam (111); and
**characterized in that**
the calibration measurement output is provided by the CI measurement system using a process emission produced by the processing beam (111) as a contrast mechanism.

11. The method of claim 10 wherein obtaining the calibration measurement output comprises:
reducing a CI system light source to at least a negligible level;
directing the processing beam (111) to the target;
receiving process radiation from the target into the CI measurement system when the processing beam (111) is directed at the target; and
obtaining the calibration measurement output from the CI measurement system detecting the process radiation.

12. The method of claim 10 wherein the calibration measurement output is provided based on image data from a 2D inline camera coupled to the material processing system,
wherein obtaining the calibration measurement output comprises:
directing at least one of the processing beam (111) and the measurement beam (121) to the target;
detecting, using the 2D inline camera, at least one of process radiation caused by the processing beam (111) and back-reflected light from the measurement beam (121);
and
obtaining the calibration measurement output from image data generated by the 2D inline camera detecting at least one of the process radiation and the back-reflected light from the measurement beam (121).

13. The method of claim 10 wherein modifying future measurements made by the Cl measurement system include at least one of modifying spatial positioning during measurement acquisition, modifying temporal synchronization during measurement acquisition, and modifying measurement algorithms.

14. The method of claim 10 wherein modifying future measurements made by the Cl measurement system includes modifications to correct for optical distortions introduced by a beam delivery system in the material processing system and/or in the Cl measurement system.

15. The method of claim 10 wherein modifying future measurements made by the Cl measurement system includes modifications to correct for process synchronization issues selected from the group consisting of process synchronization issues include at least one of: motion control path synchronization, processing laser energy profile synchronization, workpiece distortions, process inputs, shielding gas, cover gas, process environment, process feed material, process sacrificial material, and process fixturing.

## Patentansprüche

1. System (100, 100', 100", 100"'), das Folgendes umfasst:
ein Materialverarbeitungssystem, das eine Verarbeitungsstrahlquelle (110) zum Generieren eines Verarbeitungsstrahls (111) und einen Verarbeitungsstrahlkopf (112) zum Zuführen des Verarbeitungsstrahls (111) zu einem Target enthält;
ein Kohärenzbilderzeugungs-Messsystem (CI-Messsystem), das eine Kohärenzbilderzeugungs-Kerneinheit (CI-Kerneinheit) (120) zum Generieren eines Messstrahls (121) und ein CI-Abtastmodul zum Zuführen des Messstrahls (121) zu dem Target enthält, wobei das CI-Messsystem eine CI-Messwertausgabe erzeugt; und
wenigstens eine Steuereinheit (156), die konfiguriert ist, die CI-Messwertausgabe von der CI-Kerneinheit (120) zu empfangen, um das Materialverarbeitungssystem zu überwachen und/oder zu steuern, wobei die Steuereinheit (156) außerdem konfiguriert ist, eine Kalibrierungsmesswertausgabe zu empfangen und das CI-Messsystem wenigstens teilweise auf der Grundlage der Kalibrierungsmesswertausgabe zu steuern, wobei die Steuereinheit (156) konfiguriert ist, das CI-Messsystem zum Ändern künftiger Messungen, die durch das CI-Messsystem vorgenommen werden, zur Ausrichtung des CI-Messsystems und des Verarbeitungsstrahls (111) zu steuern; und
wobei das CI-Messsystem die Kalibrierungsmesswertausgabe erzeugt, und
**dadurch gekennzeichnet, dass** die durch den Verarbeitungsstrahl (111) erzeugte Prozessstrahlung als der Kontrastmechanismus verwendet wird, um die Kalibrierungsausgabe von dem CI-Messsystem zu erzeugen.

2. System (100, 100', 100", 100"') nach Anspruch 1, das ferner eine 2D-Inline-Kamera, die mit dem Verarbeitungskopf gekoppelt ist, enthält, wobei die 2D-Inline-Kamera Bilddaten generiert, die zum Erzeugen der Kalibrierungsmesswertausgabe verwendet werden.

3. System (100, 100', 100", 100"') nach Anspruch 2, wobei die 2D-Inline-Kamera einen Strahlengang mit dem CI-Messsystem gemeinsam nutzt und wobei zurückreflektiertes Licht zwischen der 2D-Inline-Kamera und dem CI-Messsystem geteilt wird.

4. System (100, 100', 100", 100"') nach Anspruch 1, das ferner eine Doppelmantelfaser enthält, die mit der CI-Kerneinheit (120) und mit einem Fotodetektor gekoppelt ist, wobei die Doppelmantelfaser konfiguriert ist, Prozessstrahlung zu dem Fotodetektor zu senden und Licht von dem Messstrahl (121) zu der CI-Kerneinheit (120) zu senden.

5. System (100, 100', 100", 100"') nach Anspruch 4, wobei die Kalibrierungsmesswertausgabe durch den Fotodetektor erzeugt wird.

6. System (100, 100', 100", 100"') nach Anspruch 1, das ferner eine 2D-Kamera enthält, die in der Nähe des Targets positioniert ist, wobei die 2D-Kamera Bilddaten, die zum Erzeugen der Kalibrierungsmesswertausgabe verwendet werden, generiert.

7. System (100, 100', 100", 100"') nach Anspruch 1, wobei das Materialverarbeitungssystem ein Laserverarbeitungssystem enthält.

8. System (100, 100', 100", 100‴) nach Anspruch 7, wobei das Laserverarbeitungssystem einen Laser mit einer Ausgabe im Wesentlichen einer räumlichen Einzelmode mit einem M-Quadrat-Wert kleiner als 2,0 enthält.

9. System (100, 100', 100", 100"') nach Anspruch 1, wobei das CI-Messsystem ein kohärentes Inline-Bilderzeugungssystem (ICI-System) enthält.

10. Verfahren zum Kalibrieren eines Kohärenzbilderzeugungs-Messsystems (CI-Messsystems), wobei das Verfahren Folgendes umfasst:
Bereitstellen eines Materialverarbeitungssystems, das konfiguriert ist, einen Verarbeitungsstrahl (111) zu generieren und einem Target zuzuführen;
Bereitstellen eines Kohärenzbilderzeugungs-Messsystems (CI-Messsystems), das konfiguriert ist, einen Messstrahl (121) zu generieren und dem Target zuzuführen, und das konfiguriert ist, eine CI-Messsystemausgabe zum Steuern und/oder Überwachen des Materialverarbeitungssystems bereitzustellen;
Erhalten einer Kalibrierungsmesswertausgabe von dem CI-Messsystem und/oder von einem Zusatzsensor; und
automatisches Steuern des CI-Messsystems wenigstens teilweise auf der Grundlage der Kalibrierungsmesswertausgabe, wobei das CI-Messsystem zum Ändern künftiger Messungen, die durch das CI-Messsystem vorgenommen werden, zur Ausrichtung des CI-Messsystems und des Verarbeitungsstrahls (111) gesteuert wird; und
**dadurch gekennzeichnet, dass**
die Kalibrierungsmesswertausgabe durch das CI-Messsystem unter Verwendung einer Prozessemission, die durch den Verarbeitungsstrahl (111) erzeugt wird, als ein Kontrastmechanismus bereitgestellt wird.

11. Verfahren nach Anspruch 10, wobei das Erhalten der Kalibrierungsmesswertausgabe Folgendes umfasst:
Verringern einer CI-System-Lichtquelle auf wenigstens ein vernachlässigbares Niveau;
Richten des Verarbeitungsstrahls (111) auf das Target;
Empfangen von Prozessstrahlung von dem Target in dem CI-Messsystem, wenn der Verarbeitungsstrahl (111) auf das Target gerichtet ist; und
Erhalten der Kalibrierungsmesswertausgabe von dem CI-Messsystem, das die Prozessstrahlung detektiert.

12. Verfahren nach Anspruch 10, wobei die Kalibrierungsmesswertausgabe auf der Grundlage von Bilddaten von einer 2D-Inline-Kamera, die mit dem Materialverarbeitungssystem gekoppelt ist, bereitgestellt wird,
wobei das Erhalten der Kalibrierungsmesswertausgabe Folgendes umfasst:
Richten des Verarbeitungsstrahls (111) und/oder des Messstrahls (121) auf das Target;
Detektieren von Prozessstrahlung, die durch den Verarbeitungsstrahl (111) verursacht wird, und/oder von zurückreflektiertem Licht von dem Messstrahl (121) unter Verwendung der 2D-Inline-Kamera; und
Erhalten der Kalibrierungsmesswertausgabe von Bilddaten, die durch die 2D-Inline-Kamera, die die Prozessstrahlung und/oder das zurückreflektierte Licht von dem Messstrahl (121) detektiert, generiert werden.

13. Verfahren nach Anspruch 10, wobei das Ändern künftiger Messungen, die durch das CI-Messsystem vorgenommen werden, wenigstens eines des Änderns der räumlichen Positionierung während der Messwerterfassung, des Änderns der zeitlichen Synchronisation während der Messwerterfassung und des Änderns von Messalgorithmen umfasst.

14. Verfahren nach Anspruch 10, wobei das Ändern künftiger Messungen, die durch das CI-Messsystem vorgenommen werden, Änderungen zum Korrigieren optischer Verzerrungen, die durch ein Strahlzuführungssystem in dem Materialverarbeitungssystem und/oder in dem CI-Messsystem eingeführt werden, umfasst.

15. Verfahren nach Anspruch 10, wobei das Ändern künftiger Messungen, die durch das CI-Messsystem vorgenommen werden, Änderungen zum Korrigieren von Prozesssynchronisationsproblemen umfasst, die aus der Gruppe ausgewählt werden, die aus Prozesssynchronisationsproblemen besteht, die wenigstens eines der Folgenden enthält: Bewegungssteuerungsweg-Synchronisation, Verarbeitungslaserenergie-Profil-Synchronisation, Werkstückverwerfungen, Prozesseingaben, Formiergas, Schutzgas, Prozessumgebung, Prozesszuführungsmaterial, Prozessopfermaterial und Prozesshalterung.

## Revendications

1. Système (100, 100', 100", 100‴) comprenant :
un système de traitement de la matière comportant une source de faisceau de traitement (110) destinée à générer un faisceau de traitement (111) et une tête de faisceau de traitement (112) destinée à délivrer le faisceau de traitement (111) à une cible ;
un système de mesure d'imagerie par cohérence (CI) comportant une unité centrale (120) d'imagerie par cohérence (CI) destinée à générer un faisceau de mesure (121) et un module de balayage CI destiné à délivrer le faisceau de mesure (121) à la cible, le système de mesure CI produisant une sortie de mesure CI ; et
au moins un dispositif de commande (156) conçu pour recevoir la sortie de mesure CI en provenance de l'unité centrale CI (120) afin de surveiller et/ou commander le système de traitement de la matière, le dispositif de commande (156) étant également conçu pour recevoir une sortie de mesure d'étalonnage et pour commander le système de mesure CI au moins en partie sur la base de la sortie de mesure d'étalonnage, le dispositif de commande (156) étant conçu pour commander au système de mesure CI de modifier les futures mesures réalisées par le système de mesure CI pour l'alignement du système de mesure CI et du faisceau de traitement (111) ; et
dans lequel le système de mesure CI produit la sortie de mesure d'étalonnage, et
**caractérisé en ce que** le rayonnement de traitement produit par le faisceau de traitement (111) est utilisé comme mécanisme de contraste pour produire la sortie d'étalonnage du système de mesure CI.

2. Système (100, 100', 100", 100‴) de la revendication 1 comportant en outre une caméra 2D en ligne couplée à la tête de traitement, et dans lequel la caméra 2D en ligne génère des données d'image utilisées pour produire la sortie de mesure d'étalonnage.

3. Système (100, 100', 100", 100‴) de la revendication 2 dans lequel la caméra 2D en ligne partage un chemin optique avec le système de mesure CI, et dans lequel la lumière rétroréfléchie est divisée entre la caméra 2D en ligne et le système de mesure CI.

4. Système (100, 100', 100", 100‴) de la revendication 1 comportant en outre une fibre à double gaine couplée à l'unité centrale CI (120) et à un photodétecteur, la fibre à double gaine étant conçue pour transmettre le rayonnement de traitement au photodétecteur et pour transmettre la lumière issue du faisceau de mesure (121) à l'unité centrale CI (120).

5. Système (100, 100', 100", 100‴) de la revendication 4 dans lequel la sortie de mesure d'étalonnage est produite par le photodétecteur.

6. Système (100, 100', 100", 100‴) de la revendication 1 comportant en outre une caméra 2D positionnée à proximité de la cible, et dans lequel la caméra 2D génère des données d'image utilisées pour produire la sortie de mesure d'étalonnage.

7. Système (100, 100', 100", 100"') de la revendication 1 dans lequel le système de traitement de la matière comporte un système de traitement laser.

8. Système (100, 100', 100", 100"') de la revendication 7 dans lequel le système de traitement laser comporte un laser avec une sortie sensiblement à mode spatial unique avec une valeur de M-carré inférieure à 2,0.

9. Système (100, 100', 100", 100"') de la revendication 1 dans lequel le système de mesure CI comporte un système d'imagerie cohérente en ligne (ICI).

10. Procédé destiné à étalonner un système de mesure d'imagerie par cohérence (CI), comprenant :
l'obtention d'un système de traitement de la matière conçu pour générer et délivrer un faisceau de traitement (111) à une cible ;
l'obtention d'un système de mesure d'imagerie par cohérence (CI) conçu pour générer et délivrer un faisceau de mesure (121) à la cible et conçu pour fournir une sortie de système de mesure CI afin de commander et/ou surveiller le système de traitement de la matière ;
l'obtention d'une sortie de mesure d'étalonnage en provenance du système de mesure CI et/ou d'un capteur auxiliaire ; et
la commande automatique du système de mesure CI au moins en partie sur la base de la sortie de mesure d'étalonnage, le système de mesure CI recevant une commande pour modifier les futures mesures réalisées par le système de mesure CI pour l'alignement du système de mesure CI et du faisceau de traitement (111) ; et
**caractérisé en ce que**
la sortie de mesure d'étalonnage est fournie par le système de mesure CI au moyen d'une émission de traitement produite par le faisceau de traitement (111) comme mécanisme de contraste.

11. Procédé de la revendication 10 dans lequel l'obtention de la sortie de mesure d'étalonnage comprend :
la réduction d'une source de lumière du système CI à un niveau au moins négligeable ;
l'acheminement du faisceau de traitement (111) jusqu'à la cible ;
la réception d'un rayonnement de traitement en provenance de la cible dans le système de mesure CI lorsque le faisceau de traitement (111) est dirigé vers la cible ;
et
l'obtention de la sortie de mesure d'étalonnage à partir du système de mesure CI détectant le rayonnement de traitement.

12. Procédé de la revendication 10 dans lequel la sortie de mesure d'étalonnage est fournie sur la base de données d'image provenant d'une caméra 2D en ligne couplée au système de traitement de la matière,
dans lequel l'obtention de la sortie de mesure d'étalonnage comprend :
l'acheminement du faisceau de traitement (111) et/ou du faisceau de mesure (121) jusqu'à la cible ;
la détection, au moyen de la caméra 2D en ligne, d'un rayonnement de traitement créé par le faisceau de traitement (111) et/ou de la lumière rétroréfléchie issue du faisceau de mesure (121) ; et
l'obtention de la sortie de mesure d'étalonnage à partir de données d'image générées par la caméra 2D en ligne détectant le rayonnement de traitement et/ou la lumière rétroréfléchie issue du faisceau de mesure (121).

13. Procédé de la revendication 10 dans lequel la modification des futures mesures réalisées par le système de mesure Cl comporte au moins une opération parmi la modification du positionnement spatial pendant l'acquisition de la mesure, la modification de la synchronisation temporelle pendant l'acquisition de la mesure, et la modification des algorithmes de mesure.

14. Procédé de la revendication 10 dans lequel la modification des mesures futures réalisées par le système de mesure Cl comporte des modifications pour corriger les distorsions optiques introduites par un système de délivrance de faisceau dans le système de traitement de la matière et/ou dans le système de mesure Cl.

15. Procédé de la revendication 10 dans lequel la modification des futures mesures réalisées par le système de mesure Cl inclut des modifications pour corriger des problèmes de synchronisation de processus choisis dans le groupe constitué par les problèmes de synchronisation de traitement incluent au moins un des suivants : synchronisation de la chaîne de commande de mouvement, synchronisation du profil d'énergie laser de traitement, déformations de la pièce de fabrication, entrées du processus, gaz de protection, gaz de couverture, environnement du processus, matériau d'alimentation du processus, matériau sacrificiel du processus et éléments de fixation du processus.
